# EUROPÄISCHE PATENTSCHRIFT

(11) **EP 3 860 939 B1**
(45) Veröffentlichungstag und Bekanntmachung des Hinweises auf die Patenterteilung: **22.12.2021**
(21) Anmeldenummer: 20706663.0
(22) Anmeldetag: 17.02.2020
(51) Int. Cl.: B65G 47/68, B65G 54/02, B67C 3/02, B67C 7/00

(54) **ABFÜLLANLAGE UND VERFAHREN ZUR BEDARFSANGEPASSTEN BEFÜLLUNG VON FLASCHEN**
FILLING PLANT AND METHOD FOR FILLING BOTTLES AS REQUIRED
INSTALLATION DE REMPLISSAGE ET PROCÉDÉ POUR LE REMPLISSAGE DE BOUTEILLES ADAPTÉ À LA DEMANDE

(30) Priorität: 19.02.2019 DE 102019104088
(43) Veröffentlichungstag der Anmeldung: 11.08.2021
(73) Patentinhaber: Till, Volker, 65719 Hofheim am Taunus (DE)
(72) Erfinder: Till, Volker, 65719 Hofheim am Taunus (DE)
(74) Vertreter: Keil & Schaafhausen Patentanwälte PartGmbB
(86) Internationale Anmeldenummer: PCT/EP2020/054094
(87) Internationale Veröffentlichungsnummer: WO 2020/169529

(56) Entgegenhaltungen:
- EP-A1- 0 775 668
- EP-A1- 1 645 340
- EP-A1- 3 178 780
- WO-A1-2010/017888
- WO-A1-2016/128089
- DE-A1- 1 811 270
- DE-A1-102016 002 244
- DE-A1-102017 105 015
- DE-B3-102017 105 016
- US-A1- 2012 085 071
- US-A1- 2013 220 481
- US-A1- 2018 072 552

## Beschreibung

Die Erfindung betrifft eine Abfüllanlage zur Behandlung von Flaschen, aufweisend mindestens eine Flaschenbehandlungsvorrichtung, einen ersten Bereitsteller, der eine erste Flaschenart bereitstellt, und einen weiteren Bereitsteller, der eine weitere Flaschenart bereitstellt, wobei sich die erste weitere Flaschenart in der Form und/oder in der Größe von der ersten Flaschenart unterscheidet. Die Erfindung betrifft ferner ein Verfahren zur Zuführung von Flaschen in eine Flaschenbehandlungsvorrichtung einer Abfüllanlage.

In der heutigen industrialisierten Gesellschaft sind automatisierte Abfüllanlagen für Massenprodukte, insbesondere Getränke, unverzichtbar geworden. Diese bestehen in der Regel aus Industrieanlagen, die man in vier Abschnitte unterteilen kann. Dies ist als erstes die Getränkeherstellung, die entweder ein reines Getränk betreffen kann, wie z.B. eine Biersorte, oder aber auch Mischgetränke, die aus zwei oder mehreren Komponenten in einem Mixer hergestellt werden, der einem Füller, insbesondere einem Füllerkarussell, vorgeschaltet ist. Der zweite Abschnitt betrifft die Bereitstellung von neuem oder gewaschenem Leergut, also der Flaschen. Als drittes den eigentlichen Abfüllprozess, bei dem das Getränk in den Behälter gefüllt wird, der Behälter verschlossen wird und anschließend gesetzeskonform dekoriert wird. Als viertes und letztes wird eine Sekundär-, Tertiär- und Endverpackung für den Versand angebracht.

Für die Abfüllung von Getränken werden verschiedene Flaschenarten verwendet, beispielsweise Glas-Mehrwegflaschen, Kunststoff-Mehrwegflaschen, Glas-Einwegflaschen, Kunststoff-Einwegflaschen und Metallflaschen.

Die heute eingesetzten Abfüllanlagen sind dafür ausgerichtet, in der Massenproduktion Flaschen mit bis zu vierzig Einheiten pro Sekunde befüllen können. Dazu sind die Anlagen an eine spezielle Behältergröße und Behälterform angepasst. Es werden jeweils mehrfach Behälter derselben Behälterart verarbeitet. Außerdem werden heute die Abfüllanlagen, insbesondere Füllerkarusselle, mit einem bereits vorgemischten Produkt versorgt, das gerade abgefüllt werden soll. Das bedeutet, dass für jede Getränkesorte, Behältergröße und/oder Behälterform ein entsprechend großer Vorrat in einer Charge produziert werden muss. Wenn die Charge nach einer bestimmten Zeit fertig produziert ist, muss die Abfüllung auf eine andere Behälter-/Getränke-Kombination umgestellt werden. Abfüllanlagen sind groß und komplex, weshalb diese Umstellungen bis zu mehreren Stunden dauern können. Je nach Betriebsgröße und Umsatz kann für eine bestimmte Behälter-/Getränke-Kombination immer eine optimale Laufzeit errechnet werden.

Immer wenn die Getränke- und/oder die Flaschenart wechselt, muss die Abfüllstraße angehalten in der Regel sogar umgebaut werden. Das kostet Zeit und Geld und mindert die Produktionskapazität. Entsprechend werden die Abfüllanlagen und ihre einzelnen Vorrichtungen für eine größere Kapazität ausgelegt, als bei kontinuierlichem Betrieb notwendig wäre. Auf diese Weise können die Stillstandzeiten ausgeglichen und die erforderliche Produktion kann dennoch erreicht werden. Dadurch werden die Vorrichtungen selbst und deren Betrieb jedoch teurer. Zudem wird aufgrund der Überdimensionierung mehr Platz benötigt. Dies alles erhöht außerdem die CO₂-Äquivalente für die Abfüllanlagen. Schließlich bleibt die Flexibilität zur Fertigstellung unterschiedlicher Produkte aufgrund der Stillstandzeiten, die für den Wechsel notwendig sind, sehr begrenzt.

In konventionellen Abfüllanlagen wird keine Digitaltechnik zur Produktionssteuerung eingesetzt. Sie und ihre einzelnen Vorrichtungen arbeiten damit analog. Auch dadurch ist die Flexibilität der Produktion beschränkt.

Setzt man beispielsweise drei verschiedene Verpackungsgrößen, wie Flaschen von 0,25 l, 0,33l und 0,5 l, und z.B. acht Getränketypen, wie z.B. Mineralwasser, Cola, Orangenlimonade, Apfelschorle, Zitronenlimonade, Bier sowie Mischungen aus Cola mit Orange, Cola mit Zitrone voraus, dann müssen mit der Abfüllanlage insgesamt vierundzwanzig unterschiedliche Typen von Produkten fertiggestellt werden. Um zahlreiche Umbauten und Stillstandszeiten der Abfüllanlage zu vermeiden, wird beispielsweise jeweils für eine Schicht lang durchgehend das gleiche Produkt produziert. Es wird also für eine Schicht lang nur ein bestimmtes Getränk in eine bestimmte Flaschenart abgefüllt. Beispielsweise wird in einer Schicht, die sich über acht Stunden erstreckt, mit einer Produktionsleistung von 60.000 Produkten pro Stunde durchgehend eine Charge des jeweiligen Produkts produziert. Bevor diese nächste Charge des gleichen Produkts fertig produziert ist, müssen also vierundzwanzig weitere Schichten vergehen.

Ein Lagervorrat sollte so groß sein, dass der Umsatz mit dem entsprechenden Produkt für eine Mindestlaufzeit bis zur nächsten Produktionscharge dieser Behälter-/Getränke-Kombination reicht. Folglich muss in diesem Beispiel die Produktion von vierundzwanzig Schichten in Hallen gelagert werden, um sicherzustellen, dass jedes Produkt durchgehend verfügbar ist. Es müssen also bis zu 24 * 8 * 60.000 = 11.520.000 befüllte Flaschen aufbewahrt werden können. Wenn zwanzig befüllte Flaschen in einem Kunststoffkasten untergebracht werden, sind entsprechend bis zu 576.000 Kunststoffkästen erforderlich.

Im Mittel lagern zwischen 3 % und 5 % der jährlichen Produktion in sogenannten Vollgutlägern. Dies bindet große Summen von Kapital in Form der gelagerten Vollgutprodukte. Es kann sich um mehrere Millionen von befüllten Flaschen, mehrere hunderttausend Kunststoffkästen und mehrere zehntausend Paletten handeln.

Es ist offensichtlich, dass damit eine erhebliche Kapitalbindung im Lager einhergeht. Darüber hinaus bestehen im Allgemeinen nicht alle Lieferungen aus einer vollständigen Palette. Manuelles Umsortieren für z.B. halbe Paletten ist daher unerlässlich und führt zu hohen zusätzlichen Kosten. Außerdem müssen zum Beladen von Liefer-LKWs auf Grund der großen benötigten Lagerfläche lange Strecken im Lager zurückgelegt werden, wodurch insbesondere die Anzahl der benötigten Gabelstapler, die Stand- und Wartezeiten der LKWs zum Beladen und damit die Logistikkosten erhöht werden. Dementsprechend viele Gabelstapler werden gebraucht.

Die Flächen für Lagergebäude für die Getränkeindustrie übersteigen daher in der Regel bei weitem die Flächen, die für die Getränkeproduktion und Abfüllung/Verpackung gebraucht werden. Insbesondere aus umweltpolitischen Aspekten der Verringerung des Flächenbedarfs ist dies zu vermeiden. Darüber hinaus müssen immer wieder überlagerte Artikel entsorgt werden, weil die Nachfrage in der Vorhersage nicht korrekt angenommen wurde.

Die Flächen der Vollgutläger sind enorm groß und können nicht für andere Zwecke genutzt werden. Zudem müssen die Vollgutläger im Winter beheizt werden. Besonders hervorzuheben ist, dass die aufwendige Lagerhaltung auch ein hohes CO₂-Äquivalent mit sich bringt. Das alles führt zu hohen Kosten und zu großen Mengen an gebundenem Kapital.

Die Abnehmer der Produkte bestellen in der Regel unterschiedliche Produkte gleichzeitig. Sie erwarten, dass ihnen in einer Warensendung unterschiedliche Produkte geliefert werden. Aufgrund der oben beschriebenen Produktion und Vollgutlagerung können die einzelnen Warensendungen erst ganz am Schluss den Bedürfnissen entsprechend zusammengestellt bzw. kommissioniert werden. Um die Warensendung vorzubereiten, muss für jedes Produkt die bestellte Stückzahl gesondert aus dem entsprechenden Lagerbereich entnommen werden. Zudem müssen die unterschiedlichen Produkte zusammengestellt und für den Versand vorbereitet werden. Das erfordert zusätzliche Arbeitsschritte und erhöht die Kosten. Auch hierdurch wird das CO₂-Äquivalent erhöht. Zudem entsteht durch die nachträgliche Zusammenstellung der Produkte eine zusätzliche Fehlerquelle.

US 2018/072552 A1 betrifft ein System zur Befüllung von unterschiedlichen Behältern, beispielsweise von Flaschen, mit unterschiedlichen Flüssigkeiten. Die Behälter können unterschiedliche Formen und Größen aufweisen. Auf einem Schienensystem fahren eine Vielzahl von Fahrzeugen zur Beförderung der Container. Die Behälter werden über mehrere Behälteraufnahmestationen eingebracht und dann mittels der Fahrzeuge zu Füll-/Verschließstationen und Dekorierstationen gefahren, danach weiter zu Abladestationen.

WO 2016/128089 A1 beschreibt eine Abfüllanlage mit einer Einfüllvorrichtung mit einem Einlauf und einem Auslauf. Dem Einlauf vorgelagert sind eine erste Behälterquelle für erste Flaschen und eine zweite Behälterquelle für zweite Flaschen. Mittels einer Weiche kann umgeschaltet werden, ob dem Einlauf ein erster Behälterstrom aus ersten Flaschen oder ein Behälterstrom aus zweiten Flaschen zugeführt werden. Beispielsweise werden der Einfüllvorrichtung zunächst erste Flaschen zugeführt und in der Einfüllvorrichtung mit Bier befüllt. Dann betätigt ein Benutzer eine Benutzereingabevorrichtung und gibt an, dass die Abfüllanlage auf Limonade umgestellt werden soll. Die Weiche wird nun so angesteuert, dass der Einfüllvorrichtung die zweiten Flaschen zugeführt werden. Ferner wird die Befüllung auf Limonade umgestellt.

Aus DE 10 2016 002 244 A ist eine Bearbeitungsvorrichtung für Behälter mit einem Bearbeitungsstern bekannt. Der Bearbeitungsstern wird über eine erste Beschickungsvorrichtung mit Flaschen und über eine zweite Beschickungsvorrichtung mit Dosen beschickt. Die Beschickungsvorrichtungen sind jeweils an unterschiedlichen Winkelpositionen des Bearbeitungssterns angeordnet, sodass die Dosen und Flaschen an unterschiedlichen Stellen des Bearbeitungssterns aufgegeben werden. Es kann hierbei vorgesehen sein, dass Flaschen und Dosen parallel bearbeitet werden, sodass die Beschickung gleichzeitig über die Beschickungsvorrichtungen erfolgt.

EP 1 645 340 A1 beschriebt die Verwendung eines Schienensystems für die Sortierung von unterschiedlichen Leergutflaschen, die zufällig hintereinander ankommen, auf sortenreine Abförderbänder. Auf einer in sich geschlossenen Förderbahn können Transporteinheiten umlaufen. Die Transporteinheiten sind mit Mitteln zum Halten von Flaschen ausgestattet. Die Haltevorrichtungen können Klammern, Tulpen, Sauger, Greifer oder Klemmbacken zum Halten der Flaschen umfassen.

DE 10 2017 105016 B3 zeigt eine Greif- und Transportvorrichtung zum Greifen, Halten, Führen und Transportieren von flaschenartigen Behältern mit einer Trägerplatte und einer Stellplatte, die um eine Rotationsachse der Vorrichtung rotierbar sind. Solche Greif- und Transportvorrichtungen werden auch als Transportstern oder Klammerstern bezeichnet.

Es ist zwar bereits bekannt, mehrere Flaschentypen und unterschiedliche Getränketypen für Sonderabfüllungen auf einer kleinen Anlage mit ca. 100 Behältern pro Stunde abzufüllen. Dafür wird jedoch bisher ein taktweise arbeitendes System für Glasflaschen mit drei Größen benötigt, das mit Knickarmrobotern nicht die Leistungsanforderungen der Getränkeindustrie für die Massenproduktion erfüllt, jedoch lediglich Spezialmischungen für Sonderaufträge erbringen kann. Als Füller wird entsprechend ein einstelliger Füllbock eingesetzt.

Ähnliches ist ebenfalls für Plastikflaschen bekannt, wobei PET-Getränkeflaschen einer Größe auf einem Füllbock gemischt werden. Für eine Behandlung von unterschiedlichen Flaschentypen, wie Glas- und/oder PET-Flaschen, sind die bekannten Systeme jedoch nicht gedacht und nicht geeignet.

Es ist daher Aufgabe der Erfindung, eine Abfüllanlage zur Verfügung zu stellen, welche die Anforderungen an die Massenproduktion erfüllt, jedoch eine extensive Lagerhaltung vermeidet und die Flexibilität erhöht.

Die Aufgabe wird erfindungsgemäß gelöst durch eine Abfüllanlage nach Anspruch 1.

Die erfindungsgemäße Abfüllanlage zur bedarfsangepassten Behandlung von Flaschen weist unter anderem auf:
mindestens eine Flaschenbehandlungsvorrichtung;
einen ersten Bereitsteller, der eine erste Flaschenart bereitstellt;
zumindest einen weiteren Bereitsteller, der eine erste weitere Flaschenart bereitstellt, wobei sie die erste weitere Flaschenart in der Form und/oder in der Größe von der ersten Flaschenart unterscheidet; und
einen Sortierer, der dazu eingerichtet ist, Flaschen selektiv beliebig aus jedem der Bereitsteller zu entnehmen, und die Flaschen in einer vorbestimmten Reihenfolge geordnet auf einer Vorlaufstrecke aufzureihen und sie der Flaschenbehandlungsvorrichtung in der vorbestimmten Reihenfolge zuzuführen, wobei die vorbestimmte Reihenfolge frei wählbar ist.

Die vorbestimmte Reihenfolge ist insbesondere unabhängig von der Flaschenart wählbar.

Im Produktionsablauf können also unterschiedliche Flaschenarten in jedem beliebigen Mengenverhältnis zueinander in der Flaschenbehandlungsvorrichtung behandelt werden. Die Flaschenarten können beispielsweise Kunststoff-Einwegflaschen, Kunststoff-Mehrwegflaschen, Glas-Einwegflaschen, Glas-Mehrwegflaschen und/oder Metallflaschen jeweils unterschiedlicher Form und/oder Größe umfassen.

Zudem ist dieses Mengenverhältnis jederzeit beliebig und ohne Produktionsunterbrechung veränderbar. Die Abfüllanlage kann insbesondere dazu eingerichtet sein, im laufenden Betriebe beliebig wechselbar (jeweils über einen Zeitraum)
- nur Flaschen der ersten Flaschenart
- nur Flaschen der zweiten Flaschenart oder
- beliebige Anteile beider Flaschenarten gleichzeitig
in der Flaschenbehandlungsvorrichtung zu behandeln.

Die Flaschenbehandlungsvorrichtung kann entlang einer Produktionsrichtung die erste Flaschenbehandlungsvorrichtung nach dem Sortierer sein.

Eine "Flaschenbehandlungsvorrichtung" im Sinne dieser Offenbarung kann insbesondere sein:
- eine Säuberungsvorrichtung für Flaschen, beispielsweise ein Rinser;
- ein Dekorierungssystem zum Dekorieren von Flaschen, beispielsweise eine Druckvorrichtung und/oder eine Etikettiervorrichtung;
- eine Befüllvorrichtung zum Befüllen von Flaschen, beispielsweise ein Füllerkarrusell;
- ein Verschließvorrichtung zum Verschließen von Flaschen;
- eine Pasteurisierungsvorrichtung, beispielsweise ein Tunnelpasteur;
- eine Endverpackungsvorrichtung; und/oder
- ein Palettierer;

Im Folgenden kann das Wort "Produkt" eine verkaufsfertige, befüllte Flasche bezeichnen. Insbesondere kann es sich bei einem "Produkt" um eine befüllte, verschlossene, dekorierte und erforderlichenfalls pasteurisierte Flasche handeln.

Mit der vorliegenden Erfindung können die benötigten Lagerflächen drastisch kleiner ausfallen. So brauchen das Lager oder die Läger für die fertigen Produkte nicht mehr für die Aufnahme der Produktion von z.B. bis zu 24 Schichten ausgelegt zu sein (bei drei unterschiedlichen Flaschenarten und acht unterschiedlichen Getränkesorten). Der Raum, der wegen der Produktion in verschiedenen Chargen aufgrund der unterschiedlichen Flaschenformen notwendig ist, kann weitgehend eingespart werden. Des Weiteren entfallen Umstellungszeiten und dadurch hervorgerufene Stillstandszeiten aufgrund des Abfüllens in unterschiedliche Flaschenarten. Auch die dafür vorzuhaltenden Lagerkapazitäten sind obsolet.

Zudem kann die maximale Kapazität der Abfüllanlage geringer ausfallen. Entsprechen können kleinere Motoren, kleinere Tanks und kleinere Pumpen verwendet werden. Das senkt die Investitionskosten für die Abfüllanlage, deren Energieverbrauch sowie entsprechend den durch sie hervorgerufenen CO₂-Ausstoß, deren Platzbedarf, und die für sie erforderlichen Wartungs- und Ersatzteilkosten.

Die frei werdenden Flächen können für andere Zwecke genutzt werden. Zudem muss weniger Lagerraum im Winter beheizt und/oder im Sommer gekühlt werden. Das ermöglicht eine deutliche Reduzierung der Kosten. Zudem verkürzen sich Staplerwege und es sind weniger Mitarbeiter für den Lagerbetrieb erforderlich.

Da insgesamt weniger fertige Produkte gelagert werden müssen, sinkt die Kapitalbindung für das Abfüllunternehmen erheblich. Es ist weniger Kapital in Form von Flaschen, Kästen, Paletten und Flascheninhalten in den Lagern gebunden. Zudem wird aufgrund der Einsparung von Heiz- und/oder Kühlenergie erheblich weniger CO₂ freigesetzt. Entsprechend ermöglicht die Erfindung für einen Abfüllbetrieb eine Reduzierung des CO₂-Ausstoßes. Nach einer Abschätzung lässt sich der CO₂-Ausstoß je nach Kapazität einer konventionellen Abfüllanlage mit ähnlicher Gesamtproduktion und entsprechender Lagerhaltung um 15 % bis 20 % reduzieren. Im Lichte der Diskussionen um eine Klimakrise wird der Verbraucher dies als erhebliches Argument in seine Kaufentscheidung einfließen lassen. Zudem können in einigen Ländern Kosten für CO₂-Zertifikate eingespart werden.

Zudem hat die reduzierte Lagerhaltung zur Folge, dass die Produkte tendenziell für eine kürzere Zeit gelagert werden. Die Produkte kommen frischer zum Endverbraucher. Außerdem sinkt das Risiko einer Überlagerung der Produkte wegen sich ändernder Nachfrage bzw. wegen sich ändernden Bestellmengen.

Schließlich kann wesentlich schneller und flexibler auf die Wünsche der Kunden nach unterschiedlichen Flaschenarten und deren gewünschten Anteilen in einzelnen Auslieferungen reagiert werden.

Erfindungsgemäß können also in einem Produktionsablauf gleichzeitig unterschiedlichen Flaschenarten im Mischbetrieb verarbeitet werden, um dann am Ende der Produktionslinie eine Reihenfolge von Verpackungen zu haben, die nicht nur sofort auf dem LKW beladen werden können, sondern auch so beladen werden können, damit eine spätere reibungslose Entladung erfolgen kann.

Ebenso sind halbe Verpackungseinheiten mit dergleichen Flaschenart eines anderen, ebenfalls zu liefernden Produkts auffüllbar.

Der Sortierer kann mit sämtlichen benötigten Bereitstellern interagieren und die entsprechenden Flaschen auf der Vorlaufstrecke aufreihen. Die Vorlaufstrecke ist beispielsweise derart angeordnet und eingerichtet, dass die Flaschen von der Vorlaufstrecke einzelnen Behandlungspositionen der Flaschenbehandlungsvorrichtung (z. B. Befüllungspositionen eines Füllerkarussells) in der vorbestimmten Reihenfolge zugeführt werden können. Dabei müssen die Flaschen nicht zwingend in benachbarte Behandlungspositionen der Flaschenbehandlungsvorrichtung (z. B. Befüllungspositionen des Füllerkarussells) übergeben werden, es ist jedoch möglich.

Gemäß einem vorteilhaften Aspekt der Erfindung erfolgt die Zuführung der Flaschen in die Flaschenbehandlungsvorrichtung nicht per Stern. Die Zuführung der Flaschen in die Flaschenbehandlungsvorrichtung kann direkt durch den Sortierer erfolgen, beispielsweise durch einzelne Mover des Sortierers. Die einzelnen Mover können auf einem oder mehreren Kreisläufen fahren. Insbesondere können die Mover die Flaschen selektiv an einem jeweiligen der Bereitsteller abholen. Es können also Flaschen unterschiedlicher Flaschenarten im Mischbetrieb in völlig beliebiger Reihenfolge gefahren werden. Insbesondere können verschiedene Flaschenarten in Abhängigkeit von der internen Anforderung oder direkt gemäß Bestellung unabhängig voneinander verfahren und beliebig sortiert werden.

Der Sortierer weist mehrere unabhängig und individuell, insbesondere servomotorisch, angetriebene Mover auf. Die Mover können beispielsweise als Schlitten ausgeführt sein. Das heißt, die einzelnen Mover, und damit die in den Movern transportierten einzelnen Flaschen, können völlig unabhängig voneinander bewegt werden.

Die Mover können insbesondere auf einer Schiene bewegbar sein. Der Sortierer weist dann entsprechend auch eine zugehörige Schiene auf, welche an Bereitstellern, Vorlaufstrecke und/oder der Flaschenbehandlungsvorrichtung (z. B. dem Füllerkarussell) angeordnet ist, sodass die Mover die jeweiligen Positionen anfahren können. Beispielhaft können hierzu das XTS-System der Firma Beckhoff oder ein vergleichbares System der Firma BuR eingesetzt werden. Allgemeiner kann der Sortierer ein Schienensystem mit einer oder mehreren Schienen umfassen, auf welchem die Mover unabhängig und individuell bewegbar sind.

Der Mover weist einen Greifer zur Aufnahme und zum Halten einer Flasche auf. Dieser ist zur Entnahme einer Flasche von den Bereitstellern und/oder zur Zuführung der Flaschen in die Flaschenbehandlungsvorrichtung (z. B. in das Füllerkarussell) eingerichtet. Der Greifer kann dabei derart angesteuert sein, dass sich dieser an einem Übergabepunkt zwischen Mover und Bereitsteller und/oder der Flaschenbehandlungsvorrichtung (z. B. dem Füllerkarussell) jeweils öffnet beziehungsweise schließt, um die Flasche freizugeben beziehungsweise aufzunehmen. Die Ansteuerung kann aktiv, also eine durch einen Aktor, beispielsweise einen Servo, gesteuerte Bewegung, oder passiv, beispielsweise durch eine Kurvenscheibe, erfolgen. Durch die mit Greifern ausgestatteten Mover können die individuellen Flaschen besonders schnell und genau bewegt werden, sodass trotz der individuellen Bearbeitung der einzelnen Flasche hohe Durchsätze erzielt werden können, wie sie für die Massenproduktion notwendig sind.

In einer besonders bevorzugten Ausführungsform der Abfüllanlage weist der Sortierer einen ersten sortenreinen Schienenbereich auf, der an dem ersten Bereitsteller angeordnet und diesem zugeordnet ist, und einen zweiten sortenreinen Schienenbereich, der an dem zweiten Bereitsteller angeordnet und diesem zugeordnet ist, derart, dass ein Mover in dem jeweiligen Schienenbereich die Flaschen vom jeweiligen Bereitsteller übernehmen kann.

Bei mehr als zwei Flaschenarten können entsprechend auch mehr als zwei sortenreine Schienenbereiche vorgesehen. Insbesondere ist je ein sortenreiner Schienenbereich pro Bereitsteller und damit pro Flaschenart vorgesehen. Ein sortenreiner Schienenbereich ist eine Schienenstrecke, in der durch die einzelnen Mover nur Flaschen einer einzigen Art transportiert werden.

Im Gegensatz dazu ist ein gemischter Schienenbereich ein solcher, auf dem Flaschen verschiedener Flaschenarten transportiert werden. In dem sortenreinen Schienenbereich können die Flaschen daher vom Bereitsteller übernommen werden, ohne mit der Übernahme der anderen Flaschenarten zu kollidieren. Somit ist eine unabhängige Flaschenübernahme möglich, wodurch es problemlos möglich ist die Abfüllanlage rein mit der ersten Flaschenart, rein mit der zweiten Flaschenart oder mit jedem beliebigen Anteil der verschiedenen Flaschenarten zu betreiben.

In einer besonders bevorzugten Ausführungsform der Abfüllanlage weist die Vorlaufstrecke ebenfalls einen Schienenbereich, insbesondere einen gemischten Schienenbereich auf, der über zumindest eine Weiche mit den jeweiligen sortenreinen Schienenbereichen verbunden ist, sodass der Mover von dem jeweiligen sortenreinen Schienenbereich über die Weiche auf die Vorlaufstrecke wechseln kann, wobei der gemischte Schienenbereich der Vorlaufstrecke zumindest in einem Teilbereich mit der Flaschenbehandlungsvorrichtung (z. B. mit dem Füllerkarussell) kämmt, in dem die Flaschen an die Flaschenbehandlungsvorrichtung (beispielsweise an einzelne Behandlungspositionen, insbesondere z. B. an Befüllungspositionen des Füllerkarussells) übergeben werden. Damit ist es möglich die einzelnen Flaschen von den Bereitstellern bis zu der Flaschenbehandlungsvorrichtung (z. B. zum Füllerkarussell) mit einem einzigen Mover zu transportieren, der die Flasche somit nur einmal greifen muss. Es ist somit ein sicherer und genauer Transport gewährleistet.

In einer besonders bevorzugten Ausführungsform der Abfüllanlage weist ein erster Mover einen fest an die erste Flaschenart angepassten Greifer und ein von dem ersten Mover verschiedener zweiter Mover einen fest an die zweite Flaschenart angepassten Greifer auf. Durch die individuelle Anpassung der Mover an eine Flaschenart entfällt ein Verstellmechanismus an den Movern. Dadurch sind die Mover wesentlich ausfallsicherer, stabiler und es können Wartungskosten eingespart werden. Statt eines Verstellmechanismus sind somit verschiedene Mover vorgesehen, die jeweils an die verschiedenen Flaschenarten angepasst ist. Die verschiedenen Flaschen werden daher jeweils von einem speziell an die jeweilige Flaschenart angepassten Mover transportiert. Insbesondere kann die Abfüllanlage für jede Flaschenart jeweils einen oder mehrere Mover aufweisen, die einen an die jeweilige Flaschenart angepassten Greifer aufweisen.

Ein Mover, der fest an eine Flaschenart angepasst ist, kann somit in dem sortenreinen Schienenbereich eine Flasche vom Bereitsteller übernehmen und über eine Weiche auf den gemischten Schienenbereich fahren. Dort wird er an entsprechender Stelle zwischen den Movern anderer Flaschenarten mit entsprechenden Flaschen eingereiht. Nach einer Übergabe der Flasche an die Flaschenbehandlungsvorrichtung (beispielsweise das Füllerkarussell) fährt der leere Mover über eine Weiche, insbesondere eine zweite Weiche, zurück in den selben sortenreinen Schienenbereich der Flaschenart, an die er angepasst ist. Dort kann er auf einer Pufferstrecke oder einem Wartebereich warten, bis eine weitere Flasche dieser Flaschenart benötigt wird. Insbesondere sind so viele an eine Flaschenart angepasste Mover vorgesehen, dass die Abfüllanlage auch rein mit dieser Flaschenart betrieben werden kann. Die Pufferstrecke oder Wartebereich ist daher so groß ausgeführt, dass sämtliche Mover dieser Art Platz finden, wenn gerade keine Flaschen dieser Flaschenart befüllt werden sollen.

In einer besonders bevorzugten Ausführungsform der Abfüllanlage weist der gemischte Schienenbereich eine in sich geschlossene Schiene auf. Die Mover können sich daher umlaufend auf der Schiene bewegen, wodurch die Steuerung der Mover wesentlich vereinfacht wird. Insbesondere ist es auch möglich, dass gleichzeitig mit der Flaschenzufuhr eine Flaschenentnahme auf der gleichen Strecke erfolgt. So kann beispielsweise ein leerer Mover an die Flaschenbehandlungsvorrichtung (z. B. das Füllerkarussell) gefahren werden und, anstatt eine Flasche zu übergeben, eine bereits in der Flaschenbehandlungsvorrichtung (z. B. im Füllerkarussell) befindliche Flasche übernehmen, die beispielsweise aufgrund eines Defekts oder Fehlers nicht an der normalen Entnahmeeinrichtung abgegeben werden soll. Die Flasche kann dann beispielsweise zum entsprechenden sortenreinen Schienenbereich zurückgeführt werden, um dort vom Bereitsteller oder einer anderen dafür vorgesehenen Einheit entnommen zu werden.

In einer besonders bevorzugten Ausführungsform der Abfüllanlage weist die Vorlaufstrecke einen linearen Transporteur sowie einen gemischten Schienenbereich auf. Wie zuvor erwähnt, ist der gemischte Schienenbereich ein Schienenbereich, auf welchem gleichzeitig mehrere Flaschenarten transportiert werden. Der erste und der zweite sortenreine Schienenbereich sind derart an dem linearen Transporteur angeordnet, dass ein Mover von den sortenreinen Schienenbereichen die Flaschen auf den linearen Transporteur übergeben kann. Es wird also der lineare Transporteur zum Erstellen der Flaschenreihenfolge, in der die Flaschen später auf die Flaschenbehandlungsvorrichtung (beispielsweise das Füllerkarussell) zu setzen sind, genutzt, um die Flaschen in dieser Reihenfolge zunächst auf das geschlossene Schienensystem für Flaschen verschiedener Flaschenarten zu übergeben. Die Mover für Flaschen verschiedener Flaschenarten arbeiten dann nicht sortenrein und können eine automatisierte Umstellung zur Anpassung an die nächste kommende Flasche aufweisen.

Der gemischte Schienenbereich ist ebenfalls an dem linearen Transporteur zur Übernahme der Flaschen angeordnet, wobei der gemischte Schienenbereich zumindest in einem Teilbereich mit der Flaschenbehandlungsvorrichtung (z. B. dem Füllerkarussell) kämmt, in welchem die Flaschen an die Flaschenbehandlungsvorrichtung (z. B. das Füllerkarussell) übergeben werden. Durch die Kombination von verschiedenen Movern auf Schienenbereichen mit einem linearen Transporteur können die Vorteile des kostengünstigen Transports der Flaschen mit der Variabilität der Mover kombiniert werden. Insbesondere werden durch die Anordnung keine Weichen benötigt, wodurch die einzelnen Mover auf einfach umlaufenden Bahnen bewegt werden und somit sehr ausfallsicher sind.

In einer besonders bevorzugten Ausführungsform der Abfüllanlage umfasst die Abfüllanlage (beispielsweise der Sortierer) universelle Mover für unterschiedliche Flaschenarten. Beispielsweise können auf dem gemischten Schienenbereich universelle Mover angeordnet sein. Die universellen Mover können jeweils einen Greifer aufweisen, der dynamisch an die erste Flaschenart sowie die zweite Flaschenart, beziehungsweise zumindest im Wesentlichen an alle vorgesehenen Flaschenarten anpassbar ist. Überaus bevorzugt sind die universellen Mover dazu eingerichtet ist, vor der Übernahme einer Flasche automatisch, beispielsweise durch eine Kurvenscheibe oder servomotorisch, an die nächste zu übernehmende Flasche angepasst zu werden.

Dazu kann nach einer Übergabeposition zwischen gemischtem Schienenbereich und der Flaschenbehandlungsvorrichtung (z. B. dem Füllerkarussell), in welche der Mover die Flasche an eine der Behandlungspositionen (z. B. eine der Befüllungspositionen) übergibt, eine Pufferstrecke vorgesehen sein, in welcher der Mover seinen Greifer an die nächste Flasche anpassen kann. Insbesondere bei einer sehr großen Zahl von verschiedenen Flaschenarten kann es von Vorteil sein, nicht für jede Flaschenart so viele Mover vorzuhalten, wie für den reinen Betrieb mit dieser Flaschenart benötigt würden. Durch die universellen Mover können somit die Gesamtanzahl der Mover und somit die Kosten der Abfüllanlage, insbesondere bei sehr vielen verschiedenen Flaschentypen, reduziert werden.

Es ist auch möglich, dass die Abfüllanlage für eine Flaschenart oder mehrere Flaschenarten jeweils angepasste Mover aufweist, die fest an die jeweilige Flaschenart angepasst sind, und zusätzlich universelle Mover aufweist. So werden die Vorteile der beiden Ansätze kombiniert. Beispielsweise können für besonders häufig zu verarbeitende Flaschenarten jeweils angepasste Mover eingesetzt werden, um die Ausfallsicherheit zu erhöhen. Andererseits kann die Abfüllanlage mit den universellen Movern auch ungewöhnlichere Flaschenarten verarbeiten, beispielsweise für Sonderwünsche der Kunden. Wenn keine ungewöhnlicheren Flaschenarten verarbeitet werden, können die universellen Mover auch für die häufigeren Flaschenarten genutzt werden.

In einer besonders bevorzugten Ausführungsform der Abfüllanlage sind die Greifer der Mover derart angeordnet, dass alle Flaschenarten mündungsgleich gefahren werden. Dadurch entfällt eine Anpassung der Flaschenhöhe in der Flaschenbehandlungsvorrichtung (z. B. im Füllerkarussell), beispielsweise im Füllerkarussell durch ein Verfahren der Flasche oder eines in der Befüllungsposition vorgesehenen Abfüllauslass in der Höhe. Bei Kunststoffflaschen mit Neckring ist die Mündungsgleichheit sowieso gegeben und sinnvoll. Auch können der erste Bereitsteller und der zweite Bereitsteller in ihren Höhen derart aufeinander abgestimmt sein, dass die Flaschen bereits mündungsgleich bereitgestellt werden.

In einer besonders bevorzugten Ausführungsform der Abfüllanlage sind die Greifer der Mover derart angeordnet, dass alle Flaschenarten bodengleich gefahren werden. Insbesondere in Kombination mit der Verwendung eines linearen Transporteurs in der Vorlaufstrecke, der die Flaschen typischerweise bodengleich transportiert, ist es vorteilhaft, auch die Greifer für bodengleichen Transport einzurichten.

In einer besonders bevorzugten Ausführungsform der Abfüllanlage weist der Greifer eine erste Greifzange mit zwei sich gegenüberstehenden Greifarmen auf, die zum Schließen des Greifers, insbesondere synchron, aufeinander zu bewegbar sind. Zum Öffnen des Greifers bewegen sich die Greifarme der Greifzange entsprechend voneinander fort. Die Greifarme können beispielsweise V-förmige Hände aufweisen, wodurch bei synchroner Bewegung sämtliche Flaschen auf die gleiche Mitte zentriert werden.

In einer besonders bevorzugten Ausführungsform der Abfüllanlage weist der Greifer eine oberhalb oder unterhalb der ersten Greifzange angeordnete, in der Höhe verstellbare, zweite Greifzange auf. Die zweite Greifzange kann wie die erste Greifzange aufgebaut sein. Überaus bevorzugt wird die zweite Greifzange durch einen Antrieb zum Öffnen und Schließen der ersten Greifzange, insbesondere durch eine Vielkeilwelle, mit angetrieben. Obere und untere Greifzange bewegen sich daher synchron, wodurch die Flaschen beim Greifvorgang sicher gehalten werden.

In einer besonders bevorzugten Ausführungsform der Abfüllanlage sind die erste und/oder die zweite Greifzange gefedert ausgeführt. Damit können geringfügige Toleranzen der Flaschen oder der Greifzangenpositionen ausgeglichen werden, wodurch etwa ein Verkeilen der Flasche verhindert wird.

In einer besonders bevorzugten Ausführungsform der Abfüllanlage weist der Greifer eine Standfläche für die Flasche auf. Dadurch muss ein Gewicht der Flasche nicht alleine durch Reibungskräfte beim Klemmen der Flaschen an den Greiferarmen getragen werden, sondern die Flasche wird von unten durch die Standfläche unterstützt. Insbesondere bei schweren Glasflaschen wird somit ein sicherer Halt gewährleistet.

Die Standfläche ist bevorzugt in der Höhe verstellbar, wodurch der Greifer auf einfach Weise an verschiedene Flaschengrößen und -formen angepasst werden kann. Die Höhenverstellbarkeit der Standfläche erleichtert es insbesondere, unterschiedliche Arten von Glasflaschen mündungsgleich in den gleichen Movern zu führen. Zusätzlich oder alternativ erleichtert es auch die Übergabe von Flaschen, die von Bereitstellern zwar mündungsgleich, aber aufgrund verschiedener Flaschenhöhen mit unterschiedlichen Bodenniveaus zugeführt werden. Das ist insbesondere relevant, wenn unterschiedliche Arten von Glasflaschen mit unterschiedlichen Flaschenhöhen mündungsgleich zugeführt werden. Ferner erleichtert die Höhenverstellbarkeit der Standfläche, dass die Standflächen mit höhenverstellbaren Standtellern der Flaschenbehandlungsvorrichtung kämmen kann.

Beispielsweise wird jedoch insbesondere nur ein kleiner Teilbereich des Flaschenbodens durch die Standfläche abgedeckt. Dies ist möglich, da die Flasche nicht alleine durch die Standfläche, sondern auch durch die Greiferarme gegen Umkippen gesichert wird. Der Greifer kann derart am Schlitten befestigt sein, dass der Schlitten im Wesentlichen auf Mündungshöhe einer gehaltenen Flasche angeordnet ist. Bei Flaschenbruch fallen dann die Scherben nicht auf oder in die Transporteinrichtung und können somit den Betrieb nicht blockieren.

Die Anzahl der Bereitsteller kann beliebig angepasst werden, insbesondere an die Anzahl der verschiedenen, zu verarbeitenden Flaschenarten.

In einer besonders vorteilhaften Ausführungsform weist die Abfüllanlage zusätzlich mindestens einen zweiten, weiteren Bereitsteller auf (also insgesamt mindestens einen ersten Bereitsteller, einen zweiten Bereitsteller und einen dritten Bereitsteller). Das erlaubt eine weitere Flexibilisierung der Produktion.

Im Allgemeinen können beliebig viele weitere Bereitsteller vorgesehen sein. Besonders bevorzugt sind alle Bereitsteller sortenrein. Sortenreine Bereitsteller sind besonders zuverlässig. Die Flexibilität der Zusammenstellung der unterschiedlichen Flaschenarten wird durch den Sortierer ermöglicht.

In einer Weiterbildung der Erfindung unterscheiden sich alle weiteren Flaschenarten von der ersten Flaschenart. Insbesondere können sich auch alle weiteren Flaschenarten jeweils untereinander unterscheiden. Außerordentlich bevorzugt umfasst die Abfüllanlage also für jede Flaschenart einer Vielzahl von unterschiedlichen Flaschenarten jeweils mindestens einen sortenreinen Bereitsteller. Es können beispielsweise N sortenreine Bereitsteller für N unterschiedliche Flaschenarten vorgesehen sein, wobei N eine natürliche Zahl größer oder gleich zwei ist.

Wenn die Abfüllanlage beispielsweise drei sortenreine Bereitsteller für drei unterschiedliche Flaschenarten aufweist, dann kann sie dazu eingerichtet sein, im laufenden Betriebe beliebig wechselbar (über einen Zeitraum)
- nur Flaschen der ersten Flaschenart,
- nur Flaschen der zweiten Flaschenart,
- nur Flaschen der dritten Flaschenart,
- beliebige Anteile der ersten und zweiten Flaschenart gleichzeitig,
- beliebige Anteile der ersten und dritten Flaschenart gleichzeitig,
- beliebige Anteile der zweiten und dritten Flaschenart gleichzeitig oder
- beliebige Anteile der ersten, zweiten und dritten Flaschenart gleichzeitig in der Flaschenbehandlungsvorrichtung zu behandeln. Die Reihenfolge der einzelnen Flaschen hintereinander ist dabei jeweils beliebig.

Es ist auch möglich, für eine Flaschenart mehr als einen Bereitsteller vorzusehen, insbesondere um den Durchsatz für diese Flaschenart zu erhöhen, oder um bei einem möglichen Defekt als Reserve eingesetzt zu werden. In diesem Fall müssen also insgesamt mindestens drei Bereitsteller vorhanden sein, beispielsweise zwei Bereitsteller für die erste Flaschenart und zumindest ein weiterer Bereitsteller für die erste weitere Flaschenart, welche sich von der ersten Flaschenart unterscheidet.

Die Bereitsteller können beispielsweise Transporteure, insbesondere lineare Transporteure, aufweisen, welche die jeweilige Flaschenart sortenrein, beispielsweise von einem entsprechenden Lager oder direkt von einer Produktionseinheit an den Sortierer zuführen. Bei mehreren Flaschentypen sind daher mehrere solcher Transportsysteme parallel zueinander angeordnet. Alternativ können die Systeme hintereinander oder in einer gemischten parallelen und hintereinander angeordneten Aufstellung angeordnet sein. Damit ist es möglich, verschiedene Flaschen in beliebiger Reihenfolge zu Befüllen (und gegebenenfalls auch mit unterschiedlichen Produkten, was nachfolgend beschrieben wird) und somit die durch eine Lagerhaltung verursachten Nachteile zu vermeiden.

Ein jeweiliger Bereitsteller kann also einen linearen Transporteur aufweisen. Zur Zuführung von Glasflaschen werden bevorzugt lineare Transporteure verwendet, da Glasflaschen in vielen Fällen keinen Neckring aufweisen.

Alternativ oder zusätzlich kann ein jeweiliger Bereitsteller einen Lufttransporteur aufweisen. Das ist insbesondere bei der Zufuhr von Kunststoffflaschen von Vorteil. Leere Kunststoffflaschen werden in der Regel an ihrem Neckring hängend zugeführt.

Gemäß einem weiteren bevorzugten Aspekt werden dem Sortierer alle Flaschenarten mündungsgleich zugeführt. Leere Plastikflaschen werden bisher in der Regel ohnehin mündungsgleich zugeführt, da sie an ihrem Neckring transportiert werden. Glasflaschen werden bisher allerdings meistens bodengleich zugeführt. Die mündungsgleiche Zuführung vereinfacht jedoch den Aufbau und die Arbeit des Sortierers.

Angenommen, es gibt für verschiedene Flaschenarten, insbesondere für verschiedene Arten von Glasflaschen, jeweils sortenreine Bereitsteller zur bodengeführten Zuführung. Das heißt, die Flaschen werden in diesen Bereitstellern jeweils auf ihrem Boden stehend zugeführt. Dann können diese verschiedenen Bereitsteller verschiedene Bodenniveaus aufweisen, zumindest an ihrem jeweiligen Übergabebereich zum Sortierer. So ist es möglich, dass die unterschiedlichen Flaschenarten dem Sortierer trotz unterschiedlicher Flaschenhöhen mündungsgleich zugeführt werden.

Gemäß einem bevorzugten Aspekt ist für zumindest einen der Bereitsteller eine Höhe der Bereitstellung der Flaschen für den Sortierer verstellbar. Besonders bevorzugt trifft dies auf mehrere oder alle der Bereitsteller zu. Insbesondere kann ein solcher Bereitsteller dazu eingerichtet sein, dass eine Transporthöhe in Abhängigkeit einer Mündungsform, Form und/oder Höhe der bereitgestellten Flaschenart anpassbar ist bzw. angepasst wird. Für einen solchen Bereitsteller kann beispielsweise der Transporteur und/oder Lufttransporteur in der Höhe verstellbar sein, zumindest in einem Endbereich (am Sortierer). Das ist von Vorteil, wenn das Sortiment der Flaschenarten umgestellt wird. Dies macht die Abfüllanlage noch flexibler.

Beispielsweise kann derselbe Transporteuer nacheinander zur Zuführung unterschiedlicher Arten von Glasflaschen mit unterschiedlichen Flaschenhöhen genutzt werden. Die unterschiedlichen Glasflaschen werden trotz ihrer unterschiedlichen Flaschenhöhen bodengeführt und dennoch mündungsgleich dem Sortierer zugeführt. Dazu werden dem Sortierer durch diesen Transporteur beispielsweise zunächst Glasflaschen einer ersten Flaschenart mit einer ersten, größeren Flaschenhöhe bodengeführt zugeführt. Dann wird die Höhe der Bereitstellung des Transporteurs an den Sortierer weiter nach oben verfahren. Danach werden Glasflaschen einer zweiten Flaschenart mit einer zweiten, niedrigeren Flaschenhöhe bodengeführt dem Sortierer zugeführt. Da die Höhe der Bereitstellung an die zweite Flaschenhöhe angepasst ist, werden die Glasflaschen der zweiten Flaschenart mit der gleichen Höhe der Flaschenmündung zugeführt wie die Glasflaschen der ersten Flaschenart.

Ferner sind die zuvor genannten Ausführungen zur Höhenverstellbarkeit ein probates Mittel, um die Mündungsgleichheit auch für unterschiedliche Flaschenarten zu ermöglichen, insbesondere auch für Glasflaschen.

Gemäß einem weiteren bevorzugten Aspekt werden dem Sortierer alle Flaschenarten bodengleich zugeführt. Leere Glasflaschen werden bisher in der Regel ohnehin bodengleich zugeführt. Die bodengleiche Zuführung bietet sich beispielsweise besonders dann an, wenn die Flaschen in dem Sortierer bodengleich geführt werden.

Für die unterschiedlichen Bereitsteller sind entsprechend beliebige unterschiedliche oder gleiche Konfigurationen möglich.

Die vorbestimmte Reihenfolge ist eine Abfolge von Flaschen. Die Flaschen können beliebig von unterschiedlichen Flaschenarten sein. Die vorbestimmte Reihenfolge kann insbesondere in einer Steuereinheit des Sortierers abgespeichert sein kann. Sie kann für einen bestimmten Auftrag, also gegebenenfalls auch eine konkrete Lieferung, erzeugt werden.

Bevorzugt umfasst die Abfüllanlage ein Steuerungssystem, das dazu eingerichtet ist, die vorbestimmte Reihenfolge zu bestimmen.

Besonders bevorzugt wird die vorbestimmte Reihenfolge anhand einer frei wählbaren Auslass-Reihenfolge, mit welcher die fertig behandelten Flaschen (bzw. die Produkte) die Abfüllanlage verlassen sollen, bestimmt (beispielsweise automatisiert durch das Steuerungssystem). Die Auslass-Reihenfolge kann insbesondere diejenige Reihenfolge sein, in welcher die Produkte die letzte Flaschenbehandlungsvorrichtung der Abfüllanlage verlassen. Das erlaubt eine "On-the-Fly" und/oder "On-Demand"-Produktion direkt in der gewünschten Auslass-Reihenfolge.

Alternativ oder zusätzlich ist das Steuerungssystem dazu eingerichtet, die vorbestimmte Reihenfolge automatisiert aus einem Produktionsauftrag und/oder mehreren Produktionsaufträgen zu bestimmen.

Gemäß einem vorteilhaften Aspekt der Erfindung ist die Abfüllanlage bevorzugt dazu eingerichtet, dass eine fertig kommissionierte Bereitstellung der Produkte erfolgt. Beispielsweise können die Produkte in einer entsprechenden Auslass-Reihenfolge aus der Abfüllanlage ausgebegeben werden. Insbesondere kann die fertig kommissionierte Bereitstellung zur direkten Beladung einer oder mehrerer Abtransporteinheiten zum Abtransport der Produkte ausgestaltet sein. Eine Abtransporteinheit kann beispielsweise ein LKW, ein LKW-Anhänger, ein LKW-Auflieger, ein Kleintransporter, ein Container, ein Eisenbahnwaggon, ein Schiff oder dergleichen sein.

Das Steuerungssystem kann insbesondere dazu eingerichtet sein, die vorbestimmte Reihenfolge automatisiert auf Basis von einer oder mehreren Bestellungen zu bestimmen. Die Reihenfolge kann beispielsweise nach Bestelleingang sortiert sein. Besonders bevorzug wird sie jedoch so erstellt, dass eine Entladung des LKW (bzw. allgemeiner der Abtransporteinheit) beim Endkunden bzw. bei den Endkunden berücksichtigt wird. Dazu wird das zuerst zu entnehmende Produkt also zuletzt gefüllt und damit auch zuletzt auf den LKW gesetzt, entsprechend wird das zuletzt zu entnehmende Produkt logischerweise zuerst gefüllt und kann daher auch als erstes auf den LKW gesetzt werden.

Die Abfüllanlage kann also dazu eingerichtet sein, die Produkte (bevorzugt automatisch) in einer Auslass-Reihenfolge fertigzustellen und auszulassen, die einer Umkehrung einer beliebig vorgebbaren Entlade-Reihenfolge entspricht.

In einer Weiterbildung ist das Steuerungssystem dazu eingerichtet sind, bei der Bestimmung der vorbestimmten Reihenfolge unterschiedliche Behandlungsdauern für verschiedene Flaschen in der Abfüllanlage zu berücksichtigen. Insbesondere kann das Steuerungssystem dazu eingerichtet sein, bei der Bestimmung der vorbestimmten Reihenfolge individuelle Gesamt-Behandlungsdauern für verschiedene Flaschen (bzw. Produkte) in der Abfüllanlage nach dem Sortierer zu berücksichtigen.

Im Allgemeinen erbeben sich für verschiedene Flaschen bzw. Produkte unterschiedliche, individuelle (Gesamt-)Behandlungsdauern, beispielsweise bestimmt durch unterschiedliche Behandlungsfolgen und/oder Behandlungsabläufe.

Beispielsweise kann das Befüllen einer Flasche einer größeren Flaschenart mehr Zeit in Anspruch nehmen als das Befüllen einer Flasche einer kleineren Flaschenart. In diesem Fall hängt die Behandlungsdauer von der Flaschenart ab, insbesondere von einem Füllvolumen. Eine Befüllungsdauer kann auch von dem Getränk abhängen. Beispielsweise muss eine Befüllung tendenziell langsamer stattfinden, wenn ein Getränk sehr stark zum Schäumen neigt.

Analog kann die Behandlungsdauer für verschiedene Flaschen in einem Dekorationssystem der Abfüllanlage individuell unterschiedlich sein, beispielsweise in einer digitalen Druckvorrichtung. Die erforderliche Behandlungszeit kann beispielsweise von der Druckdichte, der Flaschenart (insbesondere von ihrer Größe) und/oder von den Farben abhängen.

Damit wird die frei wählbare Auslass-Reihenfolge also sogar dann sichergestellt bzw. erreicht, wenn Behandlungsdauern für unterschiedliche Flaschen unterschiedlich sind, insbesondere nach dem Sortierer.

Die Gesamt-Behandlungsdauer einer Flasche kann die individuelle Zeit sein, welche die Abfüllanlage bis zum Auslassen des entsprechenden fertigen Produkts (z. B. dekorierte, befüllte, verschlossene und ggf. pasteurisierte Flasche) mit der jeweiligen Flasche (voraussichtlich) benötigt, nachdem diese Flasche den Sortierer verlässt. Mit anderen Worten handelt es dich um die Produktionszeit für die Flasche (bzw. für das mit dieser Flasche entstehende Produkt) ab dem Zeitpunkt, an welchem diese Flasche den Sortierer verlässt.

In einer besonders bevorzugten Ausführungsform der Abfüllanlage weist der Sortierer und/oder die Bereitsteller eine Beschleunigungsstrecke und/oder eine Pufferstrecke für die Flaschen auf. Die Nutzung ausreichender Beschleunigungs- und/oder Bremsstrecken ist wichtig, um die entsprechende Menge der Flaschen gemäß der vorbestimmten Reihenfolge dem Füller zuführen zu können. Erfindungsgemäß wird daher auch vorgeschlagen, jeweils ausreichende Pufferstrecken einzubauen, mit denen die mechanischen Abläufe jeweils entkoppelt werden. Das sind z.B. und nicht vollständig aufgelistet die Strecken im Zulauf sortenreiner Flaschentypen, auf denen die Flaschenmengen beschleunigt werden. Hier ist es sinnvoll, kleinere Mengen aufzupuffern, da sich eine geringere Masse leichter beschleunigen lässt. Das gleiche gilt entsprechend auch für die Schlitten.

Besonders bevorzugt ist das Steuerungssystem dazu eingerichtet, eine individuelle Produktionszeit für jede Flasche zu kalkulieren, insbesondere nach dem Sortierer, und die vorbestimmte Reihenfolge zumindest anhand der Auslass-Reihenfolge und den individuellen Produktionszeiten der Flaschen zu bestimmen. So ist die Abfüllanlage dazu eingerichtet, die frei wählbare Auslass-Reihenfolge und/oder die fertig kommissionierte Reihenfolge im Mischbetrieb auch dann sicherzustellen, wenn sich die individuellen Produktionszeiten für die unterschiedlichen Produkte (verschiedene Flaschen und/oder verschiedene Getränke bzw. Getränkemischungen) unterscheiden.

Beispielsweise wird die Ermittlung des Zeitpunkts der Flaschenübergabe aus der Bereitstellungseinheit rückwärts von der Position an der letzten Verpackungsmaschine berechnet. Ist nun die Behandlungsdauer für eine größere Flasche länger als für eine kleinere, so wird die größere Flasche entsprechend ihrer längeren Behandlungszeit auch früher von dem Sortierer in die nachfolgende Prozesslinie eingeschleust. Die vorbestimmte Reihenfolge der Einschleusung kann also anders sein als die Auslass-Reihenfolge.

Das Steuerungssystem kann beispielsweise eine Recheneinheit und/oder eine Software umfassen. Die Software kann auf einem Computer und/oder in einem Rechenzentrum (z.B. in einer Cloud) hinterlegt werden.

In einer Weiterbildung der Erfindung weist die Flaschenbehandlungsvorrichtung mehrere Behandlungspositionen zur Behandlung von jeweils einer Flasche auf (z. B. Befüllungspositionen des Füllerkarussells), wobei die einzelnen Behandlungspositionen universell zur Aufnahme aller unterschiedlichen Flaschenarten ausgeführt sind. Die Behandlungspositionen können damit unterschiedliche Flaschenarten, insbesondere Flaschengrößen und -Formen unmittelbar nacheinander behandeln. Dabei können die Behandlungspositionen entweder so ausgeführt sein, dass keinerlei Umstellung nötig ist, wie beispielsweise ein einfacher Standteller, auf welchen die Flaschen gestellt werden können. Alternativ können einzelne automatisierte Verstellmechanismen vorgesehen sein, die ohne eine Produktionsunterbrechung die einzelnen Behandlungspositionen an die nächste aufzunehmende Flasche anpassen.

Dadurch kann unabhängig von der vorbestimmten Reihenfolge jede Behandlungsstation genutzt werden. Die Abfüllanlage kann dazu eingerichtet sein, unabhängig von der vorbestimmten Reihenfolge zwischen zwei aufeinanderfolgenden Flaschen keine Behandlungsposition unbesetzt zu lassen. Das gilt unabhängig davon, von welcher Flaschenart die zwei aufeinanderfolgenden Flaschen sind.

Durch die Abfüllanlage können daher unterschiedliche Flaschengrößen und -Formen nacheinander ohne Umstellung durch Produktionsunterbrechung oder sogar gemischt durcheinander gefahren werden.

Besonders bevorzugt ist der der Sortierer dazu eingerichtet ist, die Flaschen von der Vorlaufstrecke einzelnen Behandlungspositionen der Flaschenbehandlungsvorrichtung in der vorbestimmten Reihenfolge zuzuführen.

Die Flaschenbehandlungsvorrichtung ist als Karussellvorrichtung ausgebildet. Das erleichtert eine einfache individuelle Einführung und Entnahme der Flaschen, insbesondere mittels der Mover. Karussellvorrichtungen können kontinuierlich arbeiten. Sie sind deshalb gut für die Massenproduktion geeignet.

In einer besonders bevorzugten Ausführungsform der Abfüllanlage weisen die Behandlungspositionen der Flaschenbehandlungsvorrichtung (beispielsweise die Befüllungspositionen des Füllerkarussells) jeweils Standteller für die Flaschen auf. Standteller können universell verschiedene Flaschengrößen und Flaschenformen tragen. Die Standteller können das Gewicht der Flasche aufnehmen. Die Standteller weisen bevorzugt eine Ausbuchtung auf, die derart ausgeformt und angeordnet ist, dass die Standfläche des Greifers bei der Übergabe der Flaschen von dem Mover an die Flaschenbehandlungsvorrichtung (z. B. das Füllerkarussell) in die Ausbuchtung eingreifen kann. Dabei kann die Standfläche an den Greifern wie ein Zahn eines Zahnrades ausgeformt sein und die Ausbuchtung im Standteller als entsprechende Zahnlücke, die bei der Übergabe ineinandergreifen.

Gemäß einem anderen überaus bevorzugten Aspekt ist die Abfüllanlage derart konfiguriert, dass bei einer Übergabe einer Flasche zwischen einem der Mover und einer der Behandlungspositionen die Standflächen des jeweiligen Movers und die Standteller der jeweiligen Behandlungsstationen miteinander kämmen. Insbesondere kann die Abfüllanlage dazu eingerichtet sein, dass eine Höhe der Standfläche des jeweiligen Movers und eine Höhe des Standtellers der jeweiligen Behandlungsstation angepasst werden.

Dieser Aspekt kann beispielsweise ausgebildet sein für:
- Das Einbringen von Flaschen von dem Sortierer in die Flaschenbehandlungsvorrichtung,
- die Entnahme von Flaschen aus der Flaschenbehandlungsvorrichtung,
- das Einbringen von Flaschen in eine weitere Flaschenbehandlungsvorrichtung, und/oder
- die Entnahme von Flaschen aus einer weiteren Flaschenbehandlungsvorrichtung.

In einer besonders bevorzugten Ausführungsform der Abfüllanlage sind die Standteller in der Höhe verstellbar. Der Standteller ist also entsprechend einstellbar, sodass dieser an verschiedene Flaschenarten (insbesondere Flaschengrößen) angepasst werden kann. Die Höhenverstellung kann servomotorisch erfolgen. Überaus bevorzugt sind die Standteller dazu eingerichtet, automatisch vor der Übernahme einer Flasche eine an die Flaschenart angepasste Höhe anzufahren. Die Standteller werden also nach Entnahme einer Flasche und vor der Aufnahme einer neuen Flasche gegebenenfalls auf ein Übergabeniveau eingerichtet, dass der Flaschenart der neuen Flasche entspricht.

In einer besonders bevorzugten Ausführungsform der Erfindung ist die Abfüllanlage dazu eingerichtet, die höhenverstellbaren Standteller der einzelnen Behandlungspositionen (z. B. Befüllungspositionen) nach Übernahme einer Flasche nach oben gegen eine Zentrierung zu fahren, insbesondere, bis die Flasche an der Zentrierung dichtend anliegt. Durch die Zentrierung wird die Flasche einerseits festgeklemmt, sodass diese durch die Fliehkräfte, welche durch die Rotation der

Flaschenbehandlungsvorrichtung, die als Karussellvorrichtung ausgeführt ist, (z. B. des Füllerkarussells) auftreten nicht herausgeschleudert werden. Außerdem wird die Flasche abgedichtet, um eine saubere Befüllung zu gewährleisten. Alternativ oder zusätzlich kann auch eine in der Höhe verstellbare federnde Klammer zum Halten der Flaschen gegen die Fliehkräfte in der Flaschenbehandlungsvorrichtung (z. B. im Füllerkarussell) vorgesehen sein. Die federnde Klammer kann dann nach dem Auslauf einer vorherigen Flasche und vor dem Einlauf einer neuen Flasche in der Höhe an die neue Flasche angepasst werden. Alternativ können mehrere Klammern vorgesehen sein und eine Flasche jeweils durch die Klammer gehalten werden, deren Höhe und Position für das Halten der Flasche geeignet ist.

In einer Weiterbildung ist die Abfüllanlage dazu eingerichtet, die höhenverstellbaren Standteller der einzelnen Behandlungspositionen nach Übernahme einer Flasche nach oben zu fahren, insbesondere, bis die Flasche an der Zentrierung dichtend anliegt. Im Allgemeinen können nach der Übernahme die höhenverstellbaren Standteller und/oder die höhenverstellbare Zentrierung zu diesem Zweck verfahren werden.

Die Flaschenbehandlungsvorrichtung kann beispielsweise dazu eingerichtet sein, die Flaschen zumindest während der Behandlung mündungsgleich zu halten (alle Mündungen auf einer Höhe). Das vereinfacht die Behandlung und verringert die Fehleranfälligkeit.

Alternativ zu dem höhenverstellbaren Standteller oder zusätzlich umfasst jede Behandlungsstation jeweils eine höhenverstellbare obere Halterung. Beispielsweise kann die (obere) Zentrierung höhenverstellbar ausgebildet sein. Die Höhenverstellung kann servomotorisch erfolgen. Die Möglichkeit der Höhenverstellung erleichtert die Aufnahme, Halterung und die Behandlung verschiedener Flaschenarten in derselben Behandlungsstation. Überaus bevorzugt sind die höhenverstellbaren oberen Halterungen bzw. Zentrierungen jeweils dazu eingerichtet, automatisch vor der Übernahme einer Flasche eine an die Flaschenart angepasste Höhe anzufahren. Die oberen Halterungen bzw. Zentrierungen werden also nach Entnahme einer Flasche und vor der Aufnahme einer neuen Flasche gegebenenfalls auf ein Übergabeniveau eingerichtet, dass der Flaschenart der neuen Flasche entspricht. Die höhenverstellbaren oberen Halterungen und Zentrierungen sind insbesondere dann von Vorteil, wenn die Flaschen in Movern, die mit der Flaschenbehandlungsvorrichtung kämmen, und/oder in der Flaschenbehandlungsvorrichtung bodengleich geführt werden.

In einer besonders bevorzugten Ausführungsform der Abfüllanlage weist die Flaschenbehandlungsvorrichtung, die als Karussellvorrichtung ausgebildet ist, eine variable Umdrehungsgeschwindigkeit auf. Die Flaschenbehandlungsvorrichtung kann ferner dazu eingerichtet sein, die Umdrehungsgeschwindigkeit dynamisch an die Behandlungsdauern der jeweils in der Flaschenbehandlungsvorrichtung angeordneten Flaschen anzupassen. Erfindungsgemäß ist die Abfüllanlage also derart eingerichtet, dass bei gleichzeitigem Vorhandensein von Flaschen mit verschiedenen Behandlungszeiten in der Flaschenbehandlungsvorrichtung der Durchsatz der Flaschen durch Variation der Umdrehungsgeschwindigkeit optimiert wird.

Die Abfüllanlage weist ein Entnahmesystem zur Entnahme der Flaschen aus der Flaschenbehandlungsvorrichtung auf, wobei die Behandlungsdauer der Flaschen in der Flaschenbehandlungsvorrichtung individuell steuerbar ist.

Da die Flaschenbehandlungsvorrichtung als Karussellvorrichtung ausgebildet ist, weist die Abfüllanlage ein Entnahmesystem zur

Entnahme der Flaschen aus der Flaschenbehandlungsvorrichtung auf, wobei eine Anzahl von Umläufen in der Flaschenbehandlungsvorrichtung für jede Flasche individuell steuerbar ist. Damit kann auf einfache und zuverlässige Weise die Behandlungsdauer für die Flaschen in der Flaschenbehandlungsvorrichtung unterschiedlich lang sein. Folglich lässt sich die Flaschenbehandlungsvorrichtung auch für sehr unterschiedliche Flaschenarten und sehr unterschiedliche Behandlungen der individuellen Flaschen sehr flexibel und dennoch sehr effizient nutzen. Flaschen, die individuell einer längeren Behandlungsdauer bedürfen, fahren einfach eine oder mehrere Umdrehungen mehr. So bleibt mehr Zeit für deren Behandlung.

Erfindungsgemäß weist das Entnahmesystem mehrere unabhängig und individuell angetriebene Mover auf. Die Mover können insbesondere servomotorisch angetrieben sein. Die Mover können insbesondere Schlitten auf zumindest einer Schiene sein. Jeder Mover weist einen Greifer zur Entnahme der Flaschen von der Flaschenbehandlungsvorrichtung (z. B. von dem Füllerkarussell) auf. Insbesondere kann das Entnahmesystem sämtliche vorstehend für den Sortierer beschriebenen Merkmale in beliebiger Kombination und unabhängig von der Ausführung der zugehörigen Flaschenzufuhr aufweisen.

Besonders bevorzugt ist das Entnahmesystem ferner dazu eingerichtet, die entnommenen Flaschen auf in eine nachgeschaltete, weitere Flaschenbehandlungsvorrichtung zu übergeben, vorzugsweise unmittelbar.

Bevorzugt umfasst die Abfüllanlage mindestens eine weitere Flaschenbehandlungsvorrichtung, die der Flaschenbehandlungsvorrichtung nachgeschaltet ist. Die Abfüllanlage ist also derart eingerichtet, dass die Flaschen zunächst die Flaschenbehandlungsvorrichtung und danach die weitere Flaschenbehandlungsvorrichtung durchlaufen. Insbesondere können der Flaschenbehandlungsvorrichtung mehrere weitere Flaschenbehandlungsvorrichtungen nachgeschaltet sein. Überaus bevorzugt der Flaschenbehandlungsvorrichtung mehrere weitere Flaschenbehandlungsvorrichtungen seriell (also in Reihe hintereinander) nachgeschaltet.

Für jede weitere Flaschenbehandlungsvorrichtung sind die bezüglich der Flaschenbehandlungsvorrichtung beschriebenen Ausführungsformen und Modifikationen anwendbar und umgekehrt. Die Vorteile gelten entsprechend.

Bevorzugt umfasst die Abfüllanlage zumindest:
- einen Rinser;
- eine Befüllvorrichtung;
- ein Dekorierungssystem zum Dekorieren der Flaschen, beispielsweise umfassend eine Druckvorrichtung und/oder eine Etikettiervorrichtung;
- eine Verschließvorrichtung zum Verschließen der Flaschen; und/oder
- einen Verschlussbedrucker;

Besonders bevorzugt umfasst die Abfüllanlage alle diese Vorrichtungen, überaus bevorzugt hintereinandergeschaltet in der oben genannten Reihenfolge.

Insbesondere ist es vorteilhaft, dass die Flaschenbehandlungsvorrichtung, die als erste dem Sortierer nachgeschaltet ist, als Rinser, Befüllvorrichtung oder Dekorierungssystem ausgebildet ist.

Beispielsweise umfasst die Abfüllanlage bevorzugt die als Füllerkarussell ausgebildete Befüllvorrichtung.

Das obige Problem wird insbesondere gelöst durch eine Abfüllanlage zur bedarfsangepassten Befüllung von Flaschen mit einem kontinuierlich arbeitenden Füllerkarussell, einem ersten Bereitsteller und zumindest einem zweiten Bereitsteller, der eine von der ersten Flaschenart verschiedene, zweite Flaschenart bereitstellt, und einem Sortierer, der dazu eingerichtet ist, Flaschen von dem ersten und/oder dem zweiten Bereitsteller zu entnehmen und in einer vorbestimmten, frei wählbaren Reihenfolge auf einer Vorlaufstrecke aufzureihen.

Es kann sich um ein rotierendes Füllerkarussell mit mehreren Befüllungspositionen handeln.

Insbesondere kann der Sortierer dazu eingerichtet sein, die Flaschen von der Vorlaufstrecke einzelnen Befüllungspositionen des Füllerkarussells in der vorbestimmten Reihenfolge zuzuführen.

In diesem Fall ist der zweite Bereitsteller also der "mindestens eine weitere Bereitsteller" im obigen Sinne. Analog ist die zweite Flaschenart ist die "mindestens eine weitere Flaschenart" in dem obigen Sinne. Ferner ist in dieser Ausführungsform das Füllerkarussell "die Flaschenbehandlungsvorrichtung".

In einer besonders bevorzugten Ausführungsform der Erfindung weist die Abfüllanlage ein Entnahmesystem zur Entnahme der Flaschen aus dem Füllerkarussell auf, welches dazu eingerichtet ist, eine erste Flasche nach einem einzigen Umlauf im Füllerkarussell zu entnehmen und eine zweite Flasche nach zwei oder mehr Umläufen im Füllerkarussell zu entnehmen. Damit wird die Anlage effizient an die verschiedenen Füllzeiten angepasst. Die Füllzeiten einer Flasche hängen einerseits an der Größe der Flasche und damit dem zu befüllenden Volumen, aber auch an dem zu befüllenden Getränk, da beispielsweise Biergetränke oder auch Vitamin C haltige Getränke sauerstoffempfindlich sind, weswegen solche Flaschen vor dem Einfüllen der Getränke evakuiert und/oder mit CO₂ gespült werden müssen, um eine möglichst sauerstofffreie Atmosphäre innerhalb der Flasche zu erhalten. Dies ist bei Mineralwasser oder Colagetränken nicht notwendig und die Füllzeit entsprechend kürzer. Auch können die sogenannten stillen Getränke direkt nach dem Füllen abgekoppelt werden, während CO₂ haltige Getränke vorsichtig druckentlastet werden müssen, um ein Überschäumen zu vermeiden. Durch die verschiedenen Behälter/Getränke Kombinationen auf dem Füllerkarussell werden somit gleichzeitig Flaschen mit verschiedenen Füllzeiten befüllt. Je nach Verteilung können nun bestimmte Flaschen nicht in einem einzigen Umlauf, sondern in mehreren Umläufen befüllt werden. Das Entnahmesystem kann entsprechend vorprogrammiert sein, oder mit einem Sensor ausgestattet sein, der entweder einen Code der Flasche ausliest in der die Anzahl der Umläufe angegeben ist oder der die Flaschengröße erkennt und die Anzahl der Umläufe daraus bestimmt. Alternativ kann an der Entnahmeposition oder kurz davor überprüft werden, ob die Befüllung bereits abgeschlossen ist und die Flasche nur bei abgeschlossener Befüllung entnommen werden. In diesem Fall ist die Abfüllanlage für eine individuell unterschiedliche Behandlungsdauer der Flaschen in dem Füllerkarrusell eingerichtet.

Das Entnahmesystem ist gemäß einer der zuvor beschriebenen Ausführungen ausgebildet. Nach dem Entnahmesystem kann die Verschließvorrichtung zum Verschließen der Flaschen vorgesehen sein.

In einer besonders bevorzugten Ausführungsform der Abfüllanlage weist das Füllerkarussell eine variable Umdrehungsgeschwindigkeit auf, und ist dazu eingerichtet die Umdrehungsgeschwindigkeit dynamisch an die Füllzeiten der jeweils in dem Füllerkarussell angeordneten Flaschen anzupassen. Erfindungsgemäß ist die Abfüllanlage also derart eingerichtet, dass bei gleichzeitigem Vorhandensein von Flaschen mit verschiedenen Füllzeiten in dem Füllerkarussell der Durchsatz der Flaschen durch Variation der Umdrehungsgeschwindigkeit optimiert wird. Insbesondere kann neben der Umdrehungsgeschwindigkeit auch festgelegt werden, welche Flaschen einen und welche Flaschen zwei oder mehr Umläufe in dem Füllerkarussell verbringen. Damit muss der Füller nicht auf den längsten Zyklus für die Flasche mit der längsten Befüllungszeit eingestellt werden, sondern die Flaschen mit einem längeren Zyklus werden nicht nach Erreichen der Auslaufposition direkt vom Karussell entnommen, sondern verbleiben einen zweiten Umlauf im Füllerkarussell. Je nach Produktionsmixvon Getränkesorten und Flaschengrößen kann dann die optimale Geschwindigkeit für den maximalen Ausstoß berechnet und eingestellt werden. Diese ist im Allgemeinen nicht identisch mit der Summe der längsten oder der kürzesten Füllzeit zuzüglich den Nebenzeiten für Flaschenwechsel einer geplanten Charge, sondern hängt von der jeweiligen Kombination Behälter/Getränke ab, die jeweils auf dem Karussell zur Abfüllung kommen. Die Geschwindigkeit des Füllers ist daher variabel und kann je nach Flaschenmix von Runde zu Runde auf dem Füllerkarussell schwanken. Sind beispielsweise 80 Füllstellen auf dem Karussell und 75 davon mit kleinen Flaschen von beispielweise 0,2 Litern belegt und die anderen fünf Stellen mit Flaschen von 1,0 Liter Inhalt, so macht es keinen Sinn die Umdrehungsgeschwindigkeit so weit zu verlangsamen, dass die 1,0 Liter Flaschen in einem Umlauf voll werden. Diese Variabilität bezogen auf die Anzahl der Flaschen pro Typ und dem abzufüllenden Getränk je Flasche kann also in einem Algorithmus auf die maximale Ausbringleistung entweder nach Flaschen pro Stunde oder abzufüllenden Litern pro Stunde optimiert werden, wobei diese Berechnung mit jeder neu einlaufenden Flasche erneut automatisiert durchgeführt werden kann.

Die Aufgabe wird außerdem gelöst durch ein Füllerkarussell mit mehreren Befüllungspositionen sowie eine Getränkeversorgung für zumindest ein Grundgetränk und ein Mischgetränk, wobei auf dem Füllerkarussell, individuell für jede Flasche, aus dem Grundgetränk und dem Mischgetränk ein Getränk gemischt und in eine Flasche in der Befüllungsposition abgefüllt wird. Insbesondere wird die Aufgabe gelöst durch eine Abfüllanlage, die ein solches Füllerkarussell aufweist. Bevorzugt weist die Abfüllanlage auch die Merkmale einer der vorstehend beschriebenen Ausführungsformen auf. Die zuvor und hiernach beschriebenen Ausführungsformen und Modifikationen des Füllerkarussells können auch auf diese Variante angewendet werden und umgekehrt. Durch die Mischung der Getränke auf dem Füllerkarussell können verschiedene Getränke in einer vorbestimmten Reihenfolge abgefüllt werden. Die verschiedenen Getränke können einerseits alle in die gleiche Flaschenart gefüllt werden, oder es können in Kombination mit den vorstehenden Ausführungen auch verschiedene Flaschenarten verwendet werden.

Mit einem solchen Füllerkarussell bzw. einer Abfüllanlage mit einem solchen Füllerkarussell können die benötigten Lagerflächen drastisch kleiner ausfallen. So brauchen das Lager oder die Läger für die fertigen Produkte beispielsweise nicht mehr für die Aufnahme der Produktionen von bis zu 24 Schichten ausgelegt zu sein (bei drei unterschiedlichen Flaschenarten und acht unterschiedlichen Getränkesorten). Der Raum, der wegen der Produktion in verschiedenen Chargen aufgrund der unterschiedlichen Getränke bzw. Getränkemischungen notwendig ist, kann weitgehend eingespart werden.

Des Weiteren entfallen Umstellungszeiten und dadurch hervorgerufene Stillstandszeiten aufgrund des Abfüllens der unterschiedlichen Getränke bzw. Getränkemischungen. Auch die dafür vorzuhaltenden Lagerkapazitäten sind obsolet. Zudem kann die maximale Produktionskapazität der Abfüllanlage geringer ausfallen. Entsprechen können kleinere Motoren, kleinere Tanks und kleinere Pumpen verwendet werden. Das senkt die Investitionskosten für die Abfüllanlage, deren Energieverbrauch sowie entsprechend den durch sie hervorgerufenen CO₂-Ausstoß, deren Platzbedarf, und die für sie erforderlichen Wartungs- und Ersatzteilkosten.

Die oben genannten Vorteile aufgrund des geringeren Umfangs der Lagerhaltung gelten entsprechend.

Schließlich kann wesentlich schneller und flexibler auf die Wünsche der Kunden nach unterschiedlichen Getränken bzw. Getränkemischungen und deren gewünschten Anteilen in einzelnen Auslieferungen reagiert werden. Es können problemlos individualisierte Getränkemischungen angeboten werden.

In einer bevorzugten Ausführungsform weist das Füllerkarussell (bzw. die Abfüllanlage) zumindest einen Ringkessel für das Grundgetränk und je einen Abfüllauslass für die mehreren Befüllungspositionen auf, die mit dem Ringkessel verbunden sind. Die Abfüllauslässe weisen je eine Hauptleitung von dem zumindest einen Ringkessel für das Grundgetränk auf und zumindest eine in die Hauptleitung führende, kleinere Nebenleitung für das Mischgetränk mit jeweils regelbaren Ventilen, wobei die Abfüllanlage dazu eingerichtet ist, die Befüllung durch die regelbaren Ventile derart zu steuern, dass Grundgetränk und Mischgetränk in einer zeitlichen Abfolge zugeführt werden, wobei die Befüllung durch das reine Grundgetränk ohne Mischgetränk abgeschlossen wird.

Sollen verschiedene Grundgetränke verwendet werden, können entsprechend auch mehrere Ringkessel vorgesehen sein.

Als Mischgetränke können insbesondere Aromastoffe und/oder Sirupe eingesetzt werden.

Der Ablauf des Füllprozesses ist dann bevorzugt so, dass zuerst die Aroma- und/oder Sirupmengen in die Flasche durch den Abfüllauslass dosiert werden und danach die Grundgetränke den Abfüllauslass freispülen beziehungsweise neutralisieren, um für die nachfolgende Flasche an diesem Abfüllauslass keine Aromaübertragung aufzuweisen. Wird ein Bier/Limonaden-Mischgetränk hergestellt, so wird konventionell bisher aus Sirup und Wasser eine Limonade erstellt, die anschließend mit Bier vermischt wird, bevor es in den Ringkessel des Füllers gefüllt wird. In diesem Beispiel sollen diese Produktionsschritte alle auf dem Karussellfüller stattfinden, in dem zunächst der Sirup, dem Mischungsverhältnis entsprechend, welches individuell vom Kunden bestimmt werden kann, in die Flasche dosiert wird und anschließend das Grundgetränk Bier und zum Schluss das Grundgetränk Wasser. Damit ist die Leitung zwischen den Getränketypen und der Flasche definitiv neutral ohne weitere Aromaübertragung und alle Anteile vermischen sich in der Flasche selbst zum endgültigen Fertiggetränk. Da dies digital gesteuert an jeder Füllposition individuell stattfindet, ist es also mit einem solchen System möglich, mehrere Getränke flaschenindividuell herzustellen und gleichzeitig mit hohen Stundenleistungen abzufüllen.

In einem anderen bevorzugten Beispiel ist der Ablauf des Füllprozesses so, dass zuerst Aroma und/oder Sirup und Grundgetränk gleichzeitig durch den Abfüllauslass in die Flasche dosiert werden, wobei die Befüllung durch das reine Grundgetränk ohne Mischgetränk abgeschlossen wird. Dadurch mischen sich das Aroma und/oder das Sirup einerseits und das Grundgetränk andererseits noch schneller und besser. Beispielsweise könnte reiner Sirup ansonsten an der Wandung der Flasche kleben bleiben und sich nicht vollständig abwaschen. Da die Befüllung dennoch durch das reine Grundgetränk ohne Mischgetränk abgeschlossen wird, spült das Grundgetränk den Abfüllauslass frei beziehungsweise und neutralisiert ihn. Auch bei diesem Beispiel ist also sichergestellt, dass keine Aromaübertragung an die nachfolgende Flasche stattfindet.

Das Füllerkarussell kann dazu eingerichtet sein, dass die Anzahl der Umläufe der Flaschen individuell in Abhängigkeit von dem Getränk gesteuert wird, mit welchem die jeweilige Flasche befüllt wird. Wie erwähnt können einige Getränke bei der Abfüllung stärker zur Schaumbildung neigen als anderer. Alternativ oder zusätzlich kann die Umdrehungsgeschwindigkeit in Abhängigkeit von den in Abfüllung befindlichen Getränken gesteuert sein.

Durch Kombination des Sortierers mit dem Füllerkarussell in einer Abfüllanlage können der Lagerbedarf, die Kosten, der Bedarf an Gabelstaplern und an Mitarbeitern sowie die Kosten besonders drastisch gesenkt werden. Es entfallen nämlich sowohl der Lagerbedarf aufgrund der Produktion in Chargen wegen der unterschiedlichen Flaschenarten sowie der Lagerbedarf wegen der Produktion in Chargen wegen der unterschiedlichen Getränke bzw. Getränkemischungen. Die Kombination von dem Sortierer mit dem beschriebenen, variablen Füllerkarussell ist eine nichtlineare, synergistische Reduktion von separaten Produktionschargen möglich.

In einer weiteren bevorzugten Ausführungsform weist die Abfüllanlage Dekorierungssystem zur Dekorierung von Flaschen auf. Das Dekorierungssystem kann dazu eingerichtet sein, die Flaschen unabhängig von deren Reihenfolge selektiv und individuell zu dekorieren, zumindest in Abhängigkeit von der Flaschenart der jeweiligen Flasche und/oder einem Getränk, mit welcher die jeweilige Flasche befüllt wird.

Insbesondere kann das Dekorierungssystem direkt auf den Sortierer folgen.

Gemäß einem anderen Aspekt ist das Dekorierungssystem besonders bevorzugt vor und/oder nach dem Füller angeordnet.

Das Dekorierungssystem kann insbesondere dazu eingerichtet sein, eine individuell an die einzelne Flasche, insbesondere an die jeweilige Flaschengröße und/oder den Flascheninhalt, angepasste Dekoration an der Flasche anzubringen, welche insbesondere die gesetzlichen Vorgaben erfüllt. Es können also dazu die Abfüllvolumina und die sich aus einem Mischverhältnis ergebenden Inhaltsstoffangaben errechnet werden und entsprechend in der Dekoration mit aufgeführt werden. Es können außerdem kundenspezifische Dekorationsausstattungen für jede einzelne Flasche genutzt werden. Es können beispielsweise individuelle Labels gedruckt werden. Nach dem Befüllen und der Dekoration können die Flaschen zur weiteren Bearbeitung und Verpackung individuell ausgeschleust und somit sortiert werden.

Das Dekorierungssystem kann beispielsweise eine Druckvorrichtung zum direkten Bedrucken der Flaschen und/oder einen Etikettierer umfassen. Bei der Druckvorrichtung kann es sich um eine digitale Druckvorrichtung handeln.

Wie oben erwähnt ist, kann das Dekorierungssystem mehrere Behandlungspositionen zur Behandlung von jeweils einer Flasche aufweisen und als Karussellvorrichtung ausgeführt sein. Sie kann beispielsweise ähnlich wie das zuvor beschriebene Füllerkarussell ausgeführt sein.

Wie weiter oben bereits beschrieben ist, werden im Dekorierungssystem manche Dekore einfach und schnell zu drucken sein, wohingegen andere Dekore mehr Zeit erfordern. Deshalb ist die Abfüllanlage bevorzugt dazu eingerichtet, dass für jede Flasche eine Anzahl von Umläufen in dem Dekorierungssystem individuell steuerbar ist. Die Flaschen werden also nicht, wie bisher üblich, alle automatisch nach nur einem Umlauf durch einen Stern nacheinander aus dem Dekorierungssystem geholt. Stattdessen können sie, wenn nötig, einen weiteren Umlauf oder mehrere weitere Umläufe fahren. Die entsprechende Behandlungsposition ist dann für den jeweiligen Umlauf noch nicht frei und wird noch nicht neu besetzt. Natürlich können die Flaschen wie bisher auch schon nach nur einem Umlauf direkt wieder entnommen werden, falls kein weiterer Umlauf erforderlich ist. Erreicht werden kann dies beispielsweise durch ein Entnahmesystem gemäß einer der beschriebenen Ausführungsformen und Modifikationen.

Alternativ und/oder zusätzlich weist das Dekorierungssystem eine variable Umdrehungsgeschwindigkeit auf. Es kann insbesondere dazu eingerichtet sein, seine Umdrehungsgeschwindigkeit dynamisch an die Behandlungszeiten der jeweils in dem Dekorierungssystem angeordneten Flaschen anzupassen.

Damit kann man die Leistung des Dekorierungssystems optimal steuern.

Hat man nur kurze Behandlungszeiten, so fährt das Dekorierungssystem Maximalleistung, also mit hoher Umdrehungsgeschwindigkeit. Sind gerade ausschließlich aufwendig zu bedruckende Etiketten und/oder aufwendige Direktdrucke mit zumindest in etwa gleich langer Behandlungsdauer durchzuführen, fährt das Dekorierungssystems entsprechen langsam. Folglich werden die einzelnen Dekorierungs-Behandlungen für die verschiedenen Flaschen im Dekorierungssystem in diesem Zustand jeweils in nur einem Umlauf erledigt.

Insbesondere kann die Umdrehungsgeschwindigkeit bezüglich der Anzahl der dekorierten Flaschen pro Zeiteinheit optimiert sein und/oder bezüglich dem Abfüllvolumen aller dekorierten Flaschen pro Zeiteinheit (bspw. angegeben in Litern pro Minute) optimiert sein.

In einem weiteren Beispiel befinden sich gerade Flaschen mit kurzer Dekorier-Behandlungsdauer und Flaschen mit langer Dekorier-Behandlungsdauer gleichzeitig in der Dekoriervorrichtung. Wenn der Anteil der Flaschen mit langer Dekorier-Behandlungszeit gering ist, wird eine die Dekorier-Leistung beispielsweise dadurch optimiert, dass das Dekorierungssystem mit Maximalleistung (also hoher Umdrehungsgeschwindigkeit) arbeitet. Die Flaschen mit der kurzen Dekorier-Behandlungsdauer werden in einem Umlauf fertiggestellt und die wenigen Flaschen mit langer Dekorier-Behandlungsdauer fahren mehrere Umläufe in dem Dekorierungssystem.

In einer vorteilhaften Ausführungsform umfasst die Abfüllanlage einen Verschließer als weitere Flaschenbehandlungsvorrichtung. Besonders bevorzugt folgt der Verschließer als nächste Flaschenbehandlungsvorrichtung auf die Befüllvorrichtung, insbesondere das Füllerkarussell. Dadurch bleibt der eingefüllte Flascheninhalt nur kurz zur Umgebung exponiert.

Besonders bevorzugt ist zur Übergabe von dem Füllerkarussell zum Verschließer ein Entnahmesystem gemäß einer der beschriebenen Ausführungsformen vorgesehen.

In einer besonders bevorzugten Weiterbildung ist der Verschließer dazu eingerichtet, für individuell produktabhängig (also abhängig von der Flaschenart und/oder dem Flascheninhalt) Verschlüsse auf die befüllten Flaschen aufzubringen. Die möglichen Verschlüsse können beispielsweise Kronkorken und/oder Drehverschlüsse umfassen. Insbesondere kann der Verschließer zum Aufschrauben von Verschlüssen eingerichtet sein.

Gemäß einer bevorzugten Weiterbildung ist der Verschließer dazu eingerichtet, vor dem Auslauf auf ein bodengleiches Niveau absenken. Der Auslauf aus dem Verschließer folgt also bodengleich. Die verschlossenen Flaschen können danach beispielsweise an einen Transporteur übergeben werden.

Alternativ kann der Auslauf aus dem Verschließer mündungsgleich erfolgen. Das ist insbesondere dann der Fall, wenn nach dem Verschließer mindestens eine weitere Flaschenbehandlungsvorrichtung folgt, in welcher die Mündungsgleichheit Vorteile bietet.

Beispielsweise kann nach dem Verschließer der Verschlussbedrucker angeordnet sein. Der Verschlussbedrucker kann dazu eingerichtet sein, die Verschlüsse individuell zu bedrucken, insbesondere oben und/oder an einem Umfang. Insbesondere kann er dazu eingerichtete sein, auf oder an den Verschluss mindestens ein Merkmal in Abhängigkeit von der Flaschen-/Getränkekombination aufzudrucken. Beispielsweise der Druck auf den Verschluss abhängig vom Produkt (gekennzeichnet durch Flaschenart und/oder Flascheninhalt einschließlich der Abfüllmenge), kundenabhängig und/oder bestellungsabhängig (z.B. für saisonal bedingte Sonderversionen oder für Sonderabfüllungen) sein.

In einer besonders bevorzugten Ausführungsform der Abfüllanlage wird die Steuerung der Abfüllanlage durch individuelle, auf den Flaschen aufgebrachte Codes gesteuert, die durch zumindest ein Lesegerät detektiert werden. Das heißt, dass eine Steuereinheit die Codes durch ein entsprechendes Lesegerät ausliest, und die Abfüllanlage oder einen Teil davon basierend auf dem gelesenen Code steuert. Insbesondere kann jeweils ein Lesegerät an den Positionen vorgesehen sein, an denen eine Aktion für die Flasche erfolgen muss. Entsprechend sind bevorzugt Lesegeräte an den meisten oder allen Übergabeeinrichtungen zwischen zwei mechanischen Elementen oder Segmenten angebracht. Dadurch kann eine komplexe globale Steuerung, welche die gesamte Abfüllanlage überwacht und regeln muss, stark vereinfacht werden oder es kann sogar vollständig auf eine globale Steuerung verzichtet werden. Vielmehr kann jedes Segment der Abfüllanlage, wie etwa die einzelnen Greifer, die Flaschenbehandlungsvorrichtung, die Behandlungspositionen, beispielsweise das Füllerkarussell, die Befüllungspositionen für jede Flasche individuell den Code auslesen und die für das entsprechende Segment relevanten Parameter auslesen. So können die Greifer der Mover auf die korrekte Höhe und Öffnungsweite eingestellt werden, die Standteller in der Flaschenbehandlungsvorrichtung (z. B. im Füllerkarussell) auf die richtige Höhe justiert werden oder die Befüllungsmenge und Art in dem Füllungskarussell geregelt werden. Als Code kann beispielsweise ein QR-Code verwendet werden. Ein weiterer Vorteil besteht darin, dass die Flaschen in einer Datenbank über ihren gesamten Lebenszyklus verfolgt werden können, womit eine in der Endverpackung fehlende Flasche, weil sie beispielsweise unterwegs auf der Abfüllanlage zerbrochen ist, ohne Unterbrechung des Produktionsflusses nachproduziert werden kann und erfindungsgemäß unter Umgehung der normalen Transporteinrichtungen direkt an die Stelle gebracht werden kann, wo sie für den Abschluß eines Vorganges fehlt. Das Einschleusen an korrekter Stelle kann durch Auslesen der Informationen des Dekors und/oder durch den Flaschencode erfolgen, da die vorherige und die nachfolgende Flasche dem System bekannt sind.

In einer besonders bevorzugten Ausführungsform der Abfüllanlage wird bei Verlust und/oder Bruch einer Flasche eine neue entsprechende Flasche an der Position in der vorbestimmten Reihenfolge der verlorenen und/oder zerbrochenen Flasche eingeschleust, wobei bevorzugt eine zusätzliche Transporteinrichtung vorgesehen ist, auf der die neue Flasche an den übrigen Flaschen vorbei an die vorgesehene Position verbracht wird. Damit kann auch bei Verlust und/oder Bruch die vorgesehene Produktionsreihenfolge eingehalten werden. Die Ersatzflasche kann von einem entsprechenden Bereitsteller bereitgestellt oder explizit für die zu ersetzende Flasche produziert werden.

In einer besonders bevorzugten Ausführungsform der Abfüllanlage weist die vorbestimmte Reihenfolge eine erste Abfolge von Flaschen verschiedener Flaschenarten eines ersten Auftrags auf, wobei in die erste Abfolge eine zweite Abfolge von Flaschen verschiedener Flaschenarten eines zweiten Auftrags eingefügt ist, wobei nach der Entnahmeeinrichtung (am Auslass der Abfüllanlage) ein separates Transportband vorgesehen ist, welches die Flaschen des eingefügten zweiten Auftrags von den Flaschen des ersten Auftrags trennt. So können, insbesondere bei Großaufträgen mit langen Produktionszeiten, kurzfristig auch kleine Aufträge abgearbeitet werden. Da der gesamte Prozess der Abfüllungsreihenfolge mittels Datenverarbeitung gesteuert wird, kann also auch ermittelt werden, wann eine für einen LKW zur Beladung anstehender Auftrag zeitnah so auszuführen ist, dass er direkt von der Abfüllanlage oder aus einem nur kleinen Zwischenlager auf kurzen Wegen beladen werden kann. Dann erschließt sich auch, welche andere Aufträge ggf. dazwischen geschoben werden können, wenn z.B. der LKW ein verspätetes Eintreffen meldet. Auch kann es sinnvoll sein, solche Aufträge einzuschieben, wenn entsprechende Flaschentypen in der Mehrzahl gerade abgefüllt werden und sich damit Produktionsvorteile durch Zeiteinsparung ergibt. Es macht z.B. keinen Sinn, kleine Flaschen dann einzuschleusen, wenn gerade nur große Flaschen mit längerer Füllzeit verarbeitet werden. Deshalb kann es sinnvoll sein, solche Flaschen dann einzuschleusen, wenn ausschließlich kleine Flaschen zu diesem Zeitpunkt gefahren werden und das Füllerkarussell dann mit höherer Geschwindigkeit fahren kann.

Moderne Endverpackungsvorrichtungen sind bereits heute so konstruiert, dass sie sich automatisch auf verschiedene Flaschenarten umstellen lassen. Es bedarf also nur einer Optimierung der entsprechenden Umstellsysteme, um die verschiedenen, in individueller Reihenfolge ausgelassenen Produkte versandfertig in Flaschengebinde zu verpacken.

Die obige Aufgabe wird ferner gelöst durch ein Verfahren zur bedarfsangepassten Zuführung von Flaschen in eine Flaschenbehandlungsvorrichtung einer Abfüllanlage gemäß Anspruch 13.

Dabei werden durch einen Sortierer
- Flaschen einer ersten Flaschenart von einem ersten Bereitsteller entnommen und
- zumindest Flaschen einer ersten weiteren Flaschenart von einem ersten weiteren Bereitsteller entnommen wobei sich die erste weitere Flaschenart in der Form und/oder in der Größe von der ersten Flaschenart unterscheidet,

wobei der Sortierer die Flaschen auf einer Vorlaufstrecke in einer vorbestimmten Reihenfolge aufreiht, und
wobei die Flaschen von der Vorlaufstrecke in der vorbestimmten Reihenfolge der Flaschenbehandlungsvorrichtung zugeführt werden.

Die vorbestimmte Reihenfolge ist insbesondere unabhängig von der Flaschenart aufeinanderfolgender Flaschen wählbar, wobei der Sortierer mehrere unabhängig und individuell angetriebene Mover aufweist. Die Flaschenbehandlungsvorrichtung ist als Karussellvorrichtung ausgebildet und die Abfüllanlage weist ein Entnahmesystem zur Entnahme der Flaschen aus der Flaschenbehandlungsvorrichtung auf, wobei eine Anzahl von Umläufen in der Flaschenbehandlungsvorrichtung für jede Flasche individuell gesteuert wird, und, jeder Mover weist einen Greifer zur Entnahme einer Flasche von den Bereitstellern und/oder zur Zuführung der Flasche in die Flaschenbehandlungsvorrichtung auf.

Bevorzugt wird die vorbestimmte Reihenfolge anhand einer frei wählbaren Auslass-Reihenfolge, mit welcher die fertig behandelten Flaschen die Abfüllanlage verlassen sollen, bestimmt. Das erlaubt eine "On-the-Fly" und/oder "On-Demand"-Produktion direkt in der gewünschten Auslass-Reihenfolge.

Besonders bevorzugt wird die vorbestimmte Reihenfolge automatisiert aus einem Produktionsauftrag zu bestimmen. Alternativ oder zusätzlich kann die vorbestimmte Reihenfolge automatisiert auf Basis einer Bestellung bestimmt werden.

In einer Weiterbildung des Verfahrens erfolgt die Bestimmung der vorbestimmten Reihenfolge
- derart, dass eine fertig kommissionierte Bereitstellung der Produkte erfolgt;
- zum Erreichen einer vorgegebenen Auslass-Reihenfolge;
- unter Berücksichtigung einer vorgegebenen Entlade-Reihenfolge einer oder mehrerer Abtransporteinheiten;
- unter Berücksichtigung der unterschiedlichen Behandlungsdauern für verschiedene Flaschen, überaus bevorzugt unter Berücksichtigung der unterschiedlichen Gesamt-Behandlungsdauern für verschiedene Flaschen;
- auf Basis von einer oder mehreren Bestellungen; und/oder
- aus einem Produktionsauftrag und/oder mehreren Produktionsaufträgen.

Besonders bevorzugt wird eine individuelle Produktionszeit für jede Flasche kalkuliert und die vorbestimmte Reihenfolge wird zumindest anhand der frei wählbaren Auslass-Reihenfolge und/oder der gewünschten fertig kommissionierten Bereitstellung der Produkte einerseits sowie der individuellen Produktionszeit andererseits bestimmt. So ist die Abfüllanlage dazu eingerichtet, die frei wählbare Auslass-Reihenfolge und/oder die gewünschte fertig kommissionierte Bereitstellung im Mischbetrieb auch dann sicherzustellen, wenn sich die Produktionszeiten für die unterschiedlichen Produkte des Misch-betriebs unterscheiden.

Bevorzugt werden alle Flaschen unabhängig von der Flaschenart in der Abfüllanlage ab den Bereitstellern mündungsgleich übergeben, insbesondere zwischen aufeinander folgenden Flaschenbehandlungsvorrichtungen. Sie können nach der letzten Behandlungsmaschine auf ein einheitliches Niveau eines Flaschentransportsystems abgesetzt werden, beispielsweise zum bodengleichen Transport auf einem Auslass-Transporteur.

Die mündungsgleiche Führung kann insbesondere auch in dem Rinser aufrechterhalten werden, der bevorzugt zwischen der Dekoriervorrichtung und der Befüllvorrichtung angeordnet sein kann.

Alternativ werden alle Flaschen unabhängig von der Flaschenart in der Abfüllanlage ab den Bereitstellern bodengleich übergeben, insbesondere zwischen aufeinander folgenden Flaschenbehandlungsvorrichtungen. Alternativ und/oder zusätzlich können die Flaschen in der Flaschenbehandlungsvorrichtung und/oder ggf. den weiteren Flaschenbehandlungsvorrichtungen bodengleich geführt sei. Das bietet sich beispielsweise an, wenn nur unterschiedliche Arten von Glasflaschen befüllt werden.

In einer vorteilhaften Weiterbildung handelt es sich um ein Verfahren zum bedarfsangepassten Befüllen von Flaschen, wobei Flaschen einer ersten Form und/oder Größe von einem ersten Bereitsteller entnommen und Flaschen einer zweiten Form und/oder Größe von einem zweiten Bereitsteller entnommen und auf einer Vorlaufstrecke in eine vorbestimmte Reihenfolge gebracht werden und von der Vorlaufstrecke in der vorbestimmten Reihenfolge einem Füllerkarussell zugeführt werden und auf dem Füllerkarussell befüllt werden.

Die Erfindung betrifft außerdem ein Verfahren zum bedarfsangepassten Befüllen von Flaschen, wobei zumindest eine erste und eine zweite Flasche einem Füllerkarussell zugeführt werden und gleichzeitig auf dem Füllerkarussell befüllt werden, wobei auf dem Füllerkarussell zumindest ein Grundgetränk und vorzugsweise zumindest ein Mischgetränk vermischt und als eine erste Mischung in die erste Flasche gefüllt wird und eine von der ersten Mischung verschiedene, auf dem Füllerkarussell aus zumindest einem Grundgetränk und zumindest einem Mischgetränk gemischte, zweite Mischung in die zweite Flasche gefüllt werden kann. Das heißt, eine der Mischungen kann gegebenenfalls auch nur aus dem Grundgetränk bestehen.

Wenn also unterschiedliche Flaschen im Mischbetrieb verarbeitet werden können und diese gleichzeitig beim Befüllen eine individuelle Getränkemischung bekommen, so kann eine Lagerhaltung für die vielen Produkt/Flaschenart-Kombinationen entfallen.

Es ist damit möglich die Abfüllung für einen LKW so zu planen, dass bei seinem Eintreffen die Getränke in umgekehrter Reihenfolge zur Entladung produziert und just in time auf den LKW geladen werden.

Die vorgeschlagenen Abfüllanlagen und Verfahren ermöglichen ein "digitales Abfüllen". Digitales Abfüllen bedeutet, unmittelbar dasjenige zu produzieren, was gerade verlangt wird ("On-Demand"). Bevorzugt ist die Abfüllanlage zur vollautomatischen On-Demand-Produktion eingerichtet. Beispielsweise können automatisiert ohne menschliches Zutun durch direkte Übernahme einer Online-Bestellung die Produktionsplanung und die Abfüllung gesteuert werden. Dabei kann überdies eine voraussichtliche Abholzeit durch den Kunden oder ein voraussichtliche bzw. erforderliche Versandzeit berücksichtigt werden.

Insbesondere erlaubten die Abfüllanlagen und Verfahren einen Mischbetrieb von Glasflaschen, Kunststoffflaschen und/oder Metallflaschen und/oder von verschiedenen Getränkefüllungen.

Es entfallen also alle Nachteile wie Umpacken von Teilpaletten, lange Staplerwege, was die Zahl der Mitarbeiter und die der benötigten Stapler drastisch reduziert. Die Lagerfläche wird nicht mehr benötigt, die Beheizung im Winter gegen Flaschenbruch durch Gefrieren entfällt, die Standzeiten der LKW werden verkürzt. Die Logistikkosten sinken erheblich und Kunden erhalten immer frische Ware, es gibt kein Risiko der Überlagerung. Außerdem wird die Kapitalbindung des Unternehmens drastisch reduziert.

Die Erfindung wird nachfolgend anhand von Ausführungsbeispielen und unter Bezugnahme auf die Figuren erläutert.
Fig. 1 zeigt eine schematische Darstellung einer ersten Ausführungsform der erfindungsgemäßen Abfüllanlage,
Fig. 2a zeigt eine schematische Darstellung eines an eine erste Flaschenart angepassten Movers der erfindungsgemäßen Abfüllanlage,
Fig. 2b zeigt eine schematische Darstellung eines an eine zweite Flaschenart angepassten Movers der erfindungsgemäßen Abfüllanlage,
Fig. 2c zeigt eine schematische Darstellung einer ersten Ausführungsform eines dynamisch an verschiedene Flaschenarten anpassbaren Movers der erfindungsgemäßen Abfüllanlage,
Fig. 2d zeigt eine Draufsicht auf den Mover der Fig. 2c,
Fig. 3 zeigt eine schematische Darstellung einer zweiten Ausführungsform der erfindungsgemäßen Abfüllanlage,
Fig. 4a zeigt eine Befüllungsposition einer erfindungsgemäßen Abfüllanlage direkt nach der Übergabe einer Flasche,
Fig. 4b zeigt eine Befüllungsposition einer erfindungsgemäßen Abfüllanlage bei der Befüllung einer Flasche;
Fig. 5 zeigt eine schematische Darstellung einer Modifikation der zweiten Ausführungsform der erfindungsgemäßen Abfüllanlage aus Fig. 3, die ein Dekorierungssystem als eine weitere Flaschenbehandlungsvorrichtung aufweist;
Fig. 6 zeigt eine schematische Darstellung einer dritten Ausführungsform der erfindungsgemäßen Abfüllanlage, bei welcher ein Dekorierungssystem als eine erste Flaschenbehandlungsvorrichtung an einen Sortierer anschließt;
Fig. 7a bis 7c zeigen schematische Seitenansichten einer zweiten Ausführungsform eines dynamisch an verschiedene Flaschenarten anpassbaren Movers der erfindungsgemäßen Abfüllanlage mit einer höhenverstellbaren oberen Greifzange, wobei in den Fig. 7a bis 7c Flaschen unterschiedlicher Flaschenarten in den Mover aufgenommen sind;
Fig. 7d zeigt eine schematische Draufsicht auf den Mover der Fig. 7c; und
Fig. 8 zeigt schematisch eine seitliche Schnittansicht einer Kulissenführung zur Einstellung einer Höhe der oberen Greifzange des Movers aus Fig. 7a bis 7d.

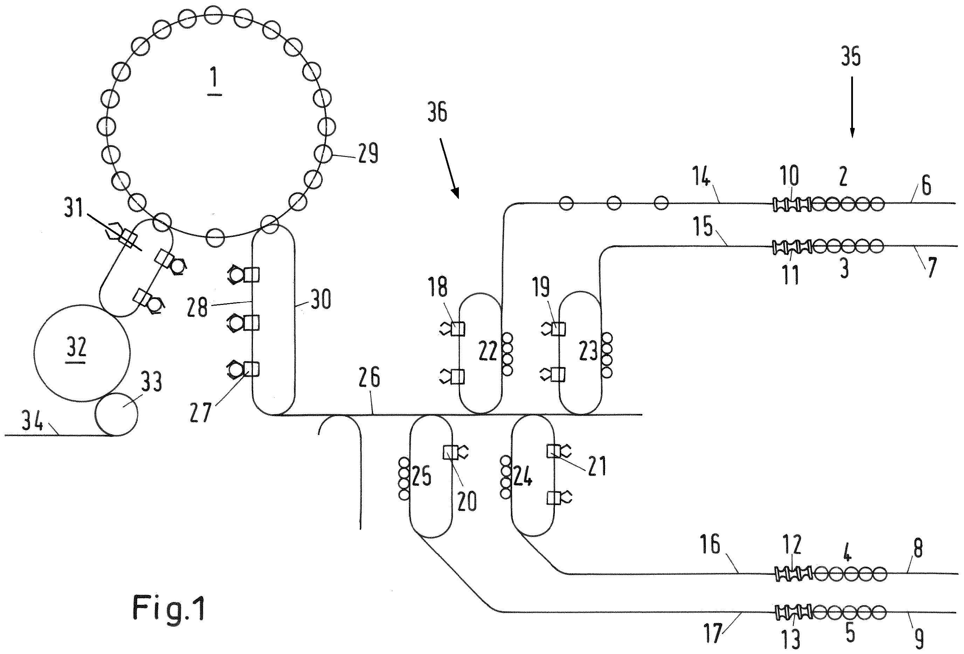

Fig. 1 zeigt eine erste Ausführungsform der erfindungsgemäßen Abfüllanlage mit einem Füllerkarussell 1, welche universelle Befüllungspositionen 29 aufweist, um verschiedene Flaschenarten 2, 3, 4, 5, aufnehmen zu können. Für jede Flaschenart 2, 3, 4, 5 ist jeweils ein Bereitsteller 35 vorgesehen, der die jeweilige Flaschenart 2, 3, 4, 5 bereitstellt. Der erste Bereitsteller 35 der ersten Flaschenart 2 weist einen entsprechenden Zulauftransporteur 6 dieser Flaschenart 2 auf, der die Flaschen beispielsweise von einem Lager, einer Reinigungsanlage oder direkt von einer Flaschenproduktion anliefert. Weiter ist eine Zuteilungsschnecke 10 vorgesehen, um die Flaschen gezielt nur bei Bedarf oder mit einer vorbestimmten Frequenz auf eine Beschleunigungsstrecke 14 weiter zu reichen. Auf der Beschleunigungsstrecke 14 werden die Flaschen der ersten Flaschensorte 2 beschleunigt oder abgebremst bis an einen Übergabepunkt mit einem Sortierer 36. In entsprechender Weise sind drei weitere Bereitsteller 35 parallel zu dem ersten Bereitsteller angeordnet die ebenfalls jeweils mit einem Zulauftransporteur 7, 8, 9 ausgestattet sind sowie eine Zuteilungsschnecke 11, 12, 13 aufweisen, um die Flaschen der Flaschenarten 3, 4, 5 jeweils auf zugehörige Beschleunigungsstrecken 15, 16, 17 ausgeben zu können. Die Beschleunigungsstrecken 15, 16, 17 enden wiederum jeweils an einem zugehörigen Übergabepunkt an dem Sortierer 36.

Der Sortierer 36 weist eine Vorlaufstrecke auf, welche als linearer Transporteur 26 ausgebildet ist, sowie je einen sortenreinen Schienenbereich 22, 23, 24, 25 für jeden Bereitsteller 35 zwischen dem jeweiligen Bereitsteller 35 und der Vorlaufstrecke. Zur Übergabe der einzelnen Flaschen von dem linearen Transporteur 26 auf das Füllerkarussell 1 weist der Sortierer 36 einen gemischten Schienenbereich 30, eine geschlossene Schienenstrecke auf der Mover fahren die unterschiedliche Flaschentypen aufnehmen können, also gemischt befördern, zwischen dem linearen Transporteur und dem Füllerkarussell 1 auf. Dieser gemischte Schienenbereich dient dazu Mover sowohl zu beschleunigen, als auch abzubremsen, ggf. bis zum Stillstand, falls z.B. auf dem Füllerkarussell eine Stelle einmal nicht besetzt werden soll und der Mover deshalb auf die nächste freie Stelle warten muss.

Die Beschleunigungsstrecke 14 der ersten Flaschensorte 2 endet in einem Übergabepunkt mit dem ersten sortenreinen Schienenbereich 22. Die Transportwege des Bereitstellers 35 und des sortenreinen Schienenbereichs 22 schneiden sich im Übergabepunkt, beziehungsweise kommen sich am Übergabepunkt so nahe, dass eine Übergabe einer Flasche erfolgen kann. Der sortenreine Schienenbereich 22 ist umlaufend geschlossen ausgebildet, wobei mehrere Schlitten 18 mit Greifern auf dem sortenreinen Schienenbereich 22 angeordnet sind. Die Greifer der Schlitten 18 auf diesem Schienenbereich 22 sind fest an die erste Flaschenart 2 angepasst, sodass diese eine Flasche der ersten Flaschenart 2 sicher halten können. Am Übergabepunkt zwischen der Beschleunigungsstrecke 14 und dem sortenreinen Schienenbereich 22 ist eine Pufferstrecke vorgesehen an der die Flaschen der ersten Flaschensorte 2 aufgepuffert werden, sodass immer genügend Flaschen der ersten Flaschensorte 2 an dem sortenreinen Schienenbereich 22 vorliegen, die von den Schlitten 18 übernommen werden können. Dazu bewegt sich ein Schlitten 18 an den Übergabepunkt und greift dort eine Flasche der ersten Flaschensorte 2 von der Pufferstrecke. Je nach der aktuellen Dynamik der Abfüllanlage können sich die Flaschen zu dem Übernahmezeitpunkt mit einer Geschwindigkeit größer null bewegen oder die Flaschen können auf der Pufferstrecke stillstehen. Entsprechend bewegt sich der Schlitten 18 an einen Übergabepunkt und stellt dabei seine Geschwindigkeit passend zu der Geschwindigkeit der Flasche ein. D.h. der Schlitten 18 bremst entweder ab, um eine stehende Flasche aufzunehmen oder beschleunigt auf die Flaschengeschwindigkeit, um diese direkt in der Bewegung übernehmen zu können.

In entsprechender Weise enden die Beschleunigungsstrecken 15, 16, 17 der übrigen Bereitsteller für die Flaschensorten 3, 4, 5 in den sortenreinen Schienenbereichen 23, 24, 25 auf denen jeweils Schlitten 19, 20, 21 angeordnet sind, die jeweils an die Flaschenarten 3, 4, 5 des jeweiligen Bereitstellers 35 angepasst sind um die Flaschen von der jeweiligen Beschleunigungsstrecke übernehmen können.

Die einzelnen Schlitten 18, 19, 20, 21 auf den jeweiligen sortenreinen Schienenbereichen 21, 22, 23, 24 sind dazu eingerichtet von den jeweiligen Bereitstellern 35 Flaschen zu entnehmen und an einem Übergabepunkt auf die Vorlaufstrecke, die als linearer Transporteur 26 ausgebildet ist, in der vorbestimmten Reihenfolge anzuordnen. Der lineare Transporteur befördert dann die Flaschen in der vorbestimmten Reihenfolge bis zu einem gemischten Schienenbereich 30.

In der in Fig. 1 gezeigten Ausführungsform werden alle Flaschen der unterschiedlichen Flaschenarten 2, 3, 4, 5 auf dem linearen Transporteur 26 bodengleich befördert. Daher stellt diese Ausführungsform eine bodengleiche Ausführungsform dar.

Der gemischte Schienenbereich 30 ist wiederum am Ende des lineareren Transporteurs angeordnet. Der gemischte Schienenbereich 30 ist ebenfalls umlaufend geschlossen ausgebildet und es befinden sich mehrere Schlitten 27 auf dem gemischten Schienenbereich 30, wobei die Schlitten 27 auf dem gemischten Schienenbereich 30 mit Greifern ausgestattet sind, welche universell alle Flaschenarten 2, 3, 4, 5 aufnehmen können, indem sie dynamisch verstellbar und somit an die verschiedenen Flaschenformen und -größen anpassbar sind. Der gemischte Schienenbereich 30 weist zwei Übergabepunkte auf. Ein erster Übergabepunkt zwischen dem gemischten Schienenbereich 30 und der als linearer Transporteur 26 ausgebildeten Vorlaufstrecke und ein zweiter Übergabepunkt zwischen dem gemischten Schienenbereich 30 und dem Füllerkarussell 1 mit den Befüllungspositionen 29.

Der gemischte Schienenbereich 30 weist eine Vorzugsrichtung auf, in der sich im Allgemeinen sämtliche Schlitten 27 auf dem gemischten Schienenbereich 30 bewegen. In der in Fig. 1 dargestellten Variante bewegen sich sämtliche Schlitten im Uhrzeigersinn entlang des gemischten Schienenbereichs 30. Somit weist der gemischte Schienenbereich 30 eine erste Seite 28 zwischen dem Übergabepunkt mit dem linearen Transporteur und dem Übergabepunkt mit dem Füllerkarussell 1 auf, auf dem sich die Schlitten mit in den Greifern aufgenommenen Flaschen bewegen. Diese Seite bildet daher eine Pufferstrecke 28 für die Übergabe der Flaschen an das Füllerkarussell 1. Die gegenüberliegende Seite zwischen der Übergabeposition zwischen dem gemischten Schienenbereich 30 und dem Füllerkarussell 1 und der Übergabeposition zwischen dem linearen Transporteur und dem gemischten Schienenbereich 30 bildet eine Pufferstrecke für Schlitten 27 mit leeren Greifern.

Die Schlitten 27 können in der Pufferstrecke 28 warten, bis sie ihre in den Greifern gehaltene Flasche an das Füllerkarussell 1 abgeben sollen. Ist dies der Fall, beschleunigen die Schlitten 27, sodass diese im Übergabepunkt mit dem Füllerkarussell 1 die gleiche Geschwindigkeit wie die Tangentialgeschwindigkeit des Füllerkarussells 1 aufweisen. Somit kann die Flasche von dem Schlitten 27 ohne eine Relativgeschwindigkeit an das Füllerkarussell 1 und dort in die jeweilige Befüllungsposition 29 übergeben werden. Auf ihrem Rückweg auf dem Schienenbereich 30 werden die Schlitten 27 jeweils auf die nächste zu übernehmende Flasche eingestellt.

Die Flaschen umlaufen dann das Füllerkarussell 1 in den einzelnen Befüllungspositionen 29 gegen den Uhrzeigersinn und werden nach einer oder mehreren Umläufen an einer Entnahmeeinrichtung 31 aus dem Füllerkarussell 1 entnommen. Die Entnahmeeinrichtung 31 ist ebenfalls als gemischter Schienenbereich ausgeführt mit mehreren Schlitten, welche Greifer aufweisen die universell sämtliche Flaschenarten 2, 3, 4, 5 greifen können. Die Schlitten in dem gemischten Schienenbereich der Entnahmeeinrichtung 31 können ebenfalls auf die gleiche Tangentialgeschwindigkeit wie das Füllerkarussell 1 beschleunigen, um eine Flasche von dem Füllerkarussell 1 ohne Relativbewegung entnehmen zu können. Daraufhin können die Schlitten auf eine Geschwindigkeit beschleunigen oder bremsen die einem nachfolgenden Verschließer 32 entspricht und die Flaschen entsprechend auf den Verschließer 32 übergeben. Die Flaschen werden im Verschließer 32 verschlossen bevor diese über einen Auslaufstern 33 an ein Abtransportband 34 übergeben werden.

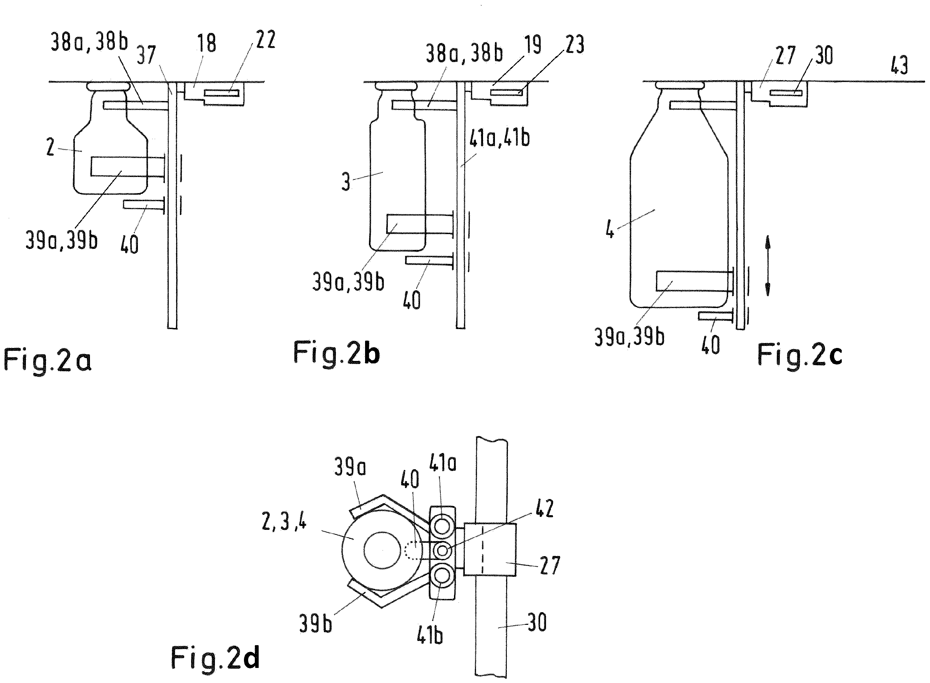

Fig. 2a) zeigt einen ersten Schlitten 18 auf einer Schiene 22 der mit einem Greifer 37 ausgestattet ist. Die Schiene 22, 23, 30 läuft in der Darstellung der Fig. 2a) bis 2c) aus der Zeichenebene heraus. Der Greifer 37 ist fest dazu ausgebildet eine Flasche der ersten Flaschensorte 2 zu tragen. Der Greifer 37 weist dazu eine erste Greifzange mit zwei Greifarmen 38a, 38b sowie eine zweite Greifzange mit zwei Greifarmen 39a, 39b auf. Zusätzlich ist eine Standfläche 40 als Bodenunterstützung vorgesehen, um auch schwere Flaschen tragen zu können.

Fig. 2b) zeigt einen zweiten Schlitten 19 auf einem Schienenbereich 23 mit einem Greifer der dazu eingerichtet ist Flaschen der zweiten Flaschenart 3 zu tragen.

Die obere Greifzange aus den zwei Greifarmen 38a, 38b ist auf gleicher Höhe angeordnet wie bei dem ersten Schlitten 18, sodass die beiden verschiedenen Flaschenarten 2, 3 mündungsgleich in der skizzierten Ebene 43 gefahren werden.

Die zweite Greifzange 39a, 39b ist, im Vergleich mit dem ersten Schlitten 18, in einem größeren Abstand zur ersten Greifzange 38a, 38b angeordnet, sodass dieser an die längere Form der zweiten Flaschenart 3 angepasst ist. Es ist ebenfalls eine Standfläche 40 als Bodenunterstützung vorgesehen, die ebenfalls passend zur größeren Länge der zweiten Flaschenart 3 etwas tiefer angebracht ist.

Fig. 2c) zeigt nun einen Schlitten 27 auf einem Schienenbereich 30 mit einem Greifer der universell an verschiedene Flaschenarten 2, 3, 4, 5 angepasst werden kann. Dieser weist dazu ebenfalls eine obere Greifzange 38a, 38b auf, die auf gleicher Höhe angeordnet ist wie bei den Greifern der Fig. 2a) und 2b), sodass auch hierbei die verschiedenen Flaschenarten 2, 3, 4, 5 mündungsgleich gefahren werden. Die untere Greifzange 39a, 39b ist gemeinsam mit der Standfläche 40 in der Höhe verstellbar, sodass der Greifer dynamisch an verschiedene Flaschengrößen angepasst werden kann.

Fig. 2d) zeigt den Schlitten 27 mit Greifern der Fig. 2c) in einer Draufsicht. Der Schlitten 27 läuft auf der Schiene 30, wobei der Greifer derart an dem Schlitten 27 angeordnet ist, dass sich der Schlitten 27 im Wesentlichen auf Mündungshöhe befindet.

Die Greifarme 39a, 39b rotieren um eine Drehachse 41a bzw. 41b und weisen eine V-förmige Hand zum Greifen der Flaschen von zwei Seiten auf. Durch die V-förmige Hand und eine synchrone Schließbewegung der Greifarme 39a, 39b werden verschiedene Flaschendurchmesser alle auf eine gemeinsame Mitte zentriert. Das gleiche gilt entsprechend für die Greifarme 38a, 38b.

Zwischen den Drehaufnahmen der Greifarme 39a, 39b ist eine Schiene 42 angeordnet, zur Höhenverstellung der Greifarme 39a, 39b.

Aus Fig. 2a) bis 2d) wird deutlich, dass die Greifer derart an den Schlitten 18, 19, 20, 21, 27 angeordnet sind, dass sich eine gehaltene Flasche im Wesentlichen nur unterhalb des Schlittens 18, 19, 20, 21, 27 und bevorzugt auch der unterhalb der jeweiligen Schiene befinden. Außerdem wird die Flasche auch seitlich versetzt zu Schlitten 18, 19, 20, 21, 27 und Schiene gehalten. Somit können bei einem Glasbruch keine Scherben in den Transportmechanismus fallen und diesen blockieren oder zerstören.

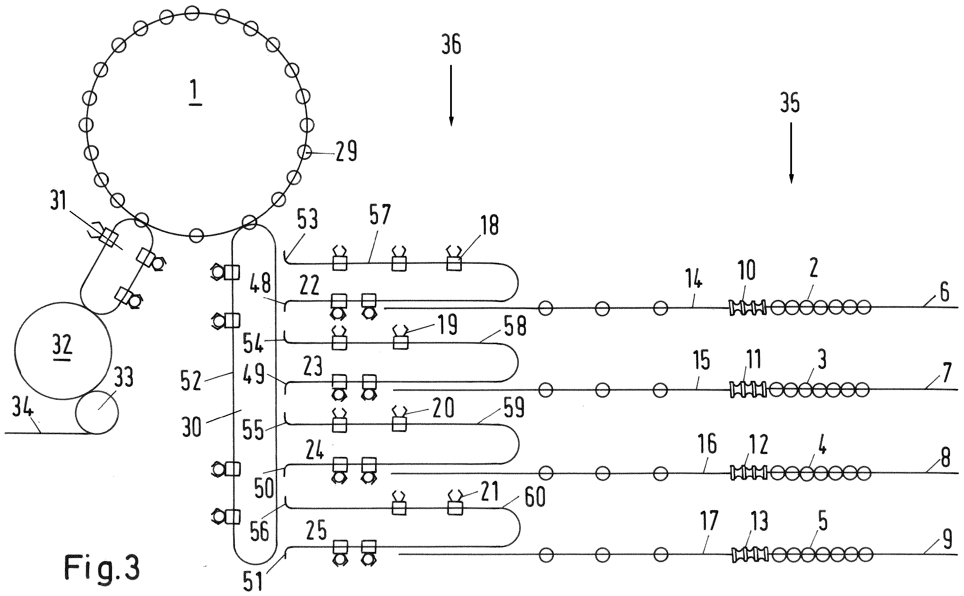

Fig. 3 zeigt eine alternative Ausführungsform der erfindungsgemäßen Abfüllanlage mit einem Füllerkarussell 1, welche ebenfalls universelle Befüllungspositionen 29 aufweist, um verschiedene Flaschenarten 2, 3, 4, 5 aufnehmen zu können. Für jede Flaschenart 2, 3, 4, 5 ist jeweils wieder ein Bereitsteller 35 vorgesehen, der die jeweilige Flaschenart 2, 3, 4, 5 bereitstellt. Der erste Bereitsteller 35 der ersten Flaschenart 2 weist wieder einen entsprechenden Zulauftransporteur 6 dieser Flaschenart 2 auf. Weiter ist ebenfalls eine entsprechende Zuteilungsschnecke 10 vorgesehen, um die Flaschen gezielt nur bei Bedarf oder mit einer vorbestimmten Frequenz auf eine Beschleunigungsstrecke 14 weiter zu reichen. Auf der Beschleunigungsstrecke 14 werden die Flaschen der ersten Flaschensorte 2 beschleunigt bis an einen Übergabepunkt mit einem Sortierer 36. Der Bereitsteller 35 der ersten Flaschenart 2 ist daher genau wie die Bereitsteller 35 der anderen Flaschenarten 3, 4, 5 identisch mit der Ausführungsform der Fig. 1 aufgebaut. Die Höhe des Bereitstellers 35 ist für jede Flaschenart (2, 3, 4, 5) bevorzugt bereits so eingestellt, dass alle Flaschen mit Ihrer Mündung auf gleicher Höhe gefahren werden.

Der Sortierer 36, welcher zwischen den Bereitstellern 35 und dem Füllerkarussell 1 angeordnet ist unterscheidet sich jedoch von dem entsprechenden Sortierer 36 der Ausführungsform der Fig. 1. Der Sortierer 36 der Fig. 3 weist je einen sortenreinen Schienenbereich 22, 23, 24, 25 für jeden Bereitsteller 35 auf, der als offener Schienenbereich ausgebildet ist. Vorderes und hinteres Ende jedes sortenreinen Schienenbereichs sind jeweils über eine Weiche 48, 49, 50, 51, 53, 54, 55, 56 mit einer Vorlaufstrecke verbunden, die als gemischter Schienenbereich 30 ausgeführt ist. Der gemischte Schienenbereich 30 ist als umlaufend geschlossener Schienenbereich ausgeführt und kämmt an einem Übergabepunkt mit dem Füllerkarussell 1 zur Übergabe der Flaschen. Dieser gemischte Schienenbereich 30 dient auch zum Beschleunigen und/oder Abbremsen von Movern.

In dem ersten sortenreinen Schienenbereich 22 sind erste Schlitten 18 angeordnet, die fest an die erste Flaschenart 2 angepasst sind. Die leeren Schlitten 18 warten in einem Puffer- oder Wartebereich 57 des sortenreinen Schienenbereichs 22 und können sich von dort aus an einen Übergabepunkt, an dem der erste Bereitsteller 35 an dem sortenreinen Schienenbereich 22 endet, bewegen, um dort eine Flasche von dem ersten Bereitsteller 35 übernehmen zu können. Der erste Schlitten 18 kann dann mit einer aufgenommenen Flasche über die Weiche 48 auf den gemischten Schienenbereich 30 wechseln. In gleicher Weise sind die Schlitten 19, 20, 21 in den sortenreinen Schienenbereichen 23, 24, 25 angeordnet und jeweils fest an die Flaschenarten 3, 4, 5 angepasst. Dort können sie in den Puffer- oder Wartebereichen 58, 59, 60 warten bis diese eine Flasche von dem jeweiligen Bereitsteller 35 in dem jeweiligen Übergabepunkt übernehmen sollen und dann über die Weichen 49, 50, 51 auf den gemischten Schienenbereich 30 fahren. Die Schlitten 18, 19, 20, 21 werden derart gesteuert, dass diese sich in der vorbestimmten Reihenfolge auf dem gemischten Schienenbereich 30 mit den jeweils aufgenommenen Flaschen aufreihen. Die Schlitten 18, 19, 20, 21 fahren dann in der vorbestimmten Reihenfolge nacheinander an den Übergabepunkt zwischen dem gemischten Schienenbereich 30 und dem Füllerkarussell 1, um dort ihre Flaschen in die jeweils vorgesehenen Befüllungspositionen 29 zu übergeben. Nach der Übergabe der Flaschen fahren die Schlitten 18, 19, 20, 21 weiter an die jeweilige Weiche 53, 54, 55, 56 des sortenreinen Schienenbereichs 22, 23, 24, 25 des Bereitstellers 35 ihrer jeweiligen Flaschenart 2, 3, 4, 5. Dort verlassen die Schlitten 18, 19, 20, 21 den gemischten Schienenbereich 30 und wechseln zurück in den jeweiligen sortenreinen Schienenbereich 22, 23, 24, 25 des jeweiligen Bereitstellers an dessen Flaschenart 2, 3, 4, 5 sie angepasst sind.

Die Entnahmeeinrichtung 31, Verschließer 32, Auslaufstern 33, sowie Abtransportband 34 können wie in der Ausführungsform der Fig. 1 ausgebildet sein.

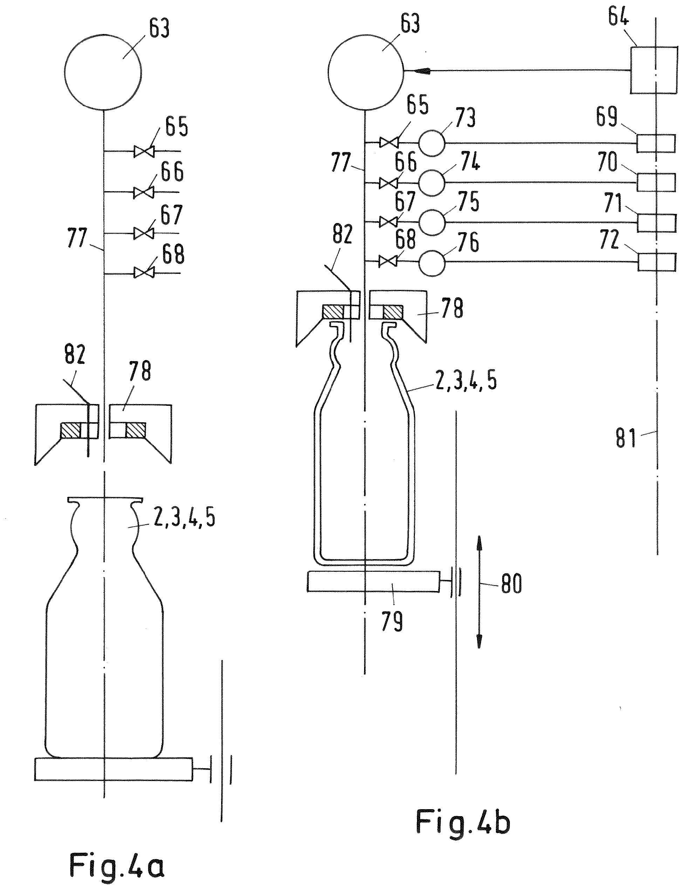

In den Figuren 4a) und 4b) sind die universellen Befüllungspositionen 29 in dem Füllerkarussell 1 dargestellt. Fig. 4a) zeigt dabei eine Flasche 2, 3, 4, 5 nach der Übergabe auf das Füllerkarussell 1 in einer Befüllungsposition 29 auf einem Standteller 79 stehend. Die Flasche steht damit zentral unter einem Füllrohr 77, welches einen Abfüllauslass bildet, und einer Zentrierung 78. Die Position ist jeweils mündungsgleich für alle Flaschen, da der Standteller 79 jeweils mittels eines servomotorisch angetriebenen Verstellmechanismus 80 vor der Flaschenübernahme auf eine Höhe gefahren wurde, die an die Höhe der aufzunehmenden Flasche angepasst ist.

Nach der Übernahme der Flasche hebt der servomotorisch angetriebenen Verstellmechanismus 80 den Standteller 79 und damit die Flasche 2, 3, 4, 5 weiter an. Dabei kommt die Mündung der Flasche mit der Zentrierung 78, insbesondere mit einer in der Zentrierung 78 vorgesehenen Dichtung, in Berührung. Durch weiteres Anheben des Standtellers 79 wird die Zentrierung 78 mit der Flasche 2, 3, 4, 5 weiter nach oben bewegt. Die Zentrierung 78 kann dabei federunterstützt sein, um eine gewisse Gegenkraft der Dichtung auf die Mündung der Flasche auszuüben, um eine gute Abdichtung zu erreichen. Die Flasche wird dabei über das untere Ende des Füllrohrs 77 gefahren. Der Hub endet, sobald sich die Flasche in ihrer vorgesehenen Füllposition befindet, wie in der Fig. 4b) dargestellt ist. In der Zentrierung 78 ist darüber hinaus einer Abluftöffnung 82 vorgesehen, durch die bei der Befüllung mit dem Getränk die verdrängte Luft abgeführt werden kann.

Das Füllrohr 77 ist mit einem Ringkessel 63 verbunden, der auf dem Füllerkarussell angeordnet ist und in dem das Grundgetränk zwischengespeichert ist. Der Ringkessel 63 wiederum wird über eine Drehdurchführung 64 mit dem Grundgetränk versorgt. Seitlich laufen mehrere Nebenrohre für Aromastoffe durch kleinere Zulaufventile 65, 66, 67, 68 in das Füllrohr 77. Für jeden der Aromastoffe ist jeweils ein kleiner Ringkessel 73, 74, 75, 76 vorgesehen, in dem die Aromastoffe vorgehalten werden. Die Ringkessel der Aromastoffe werden ebenfalls über eine Drehdurchführung 69, 70, 71, 72 versorgt.

Beim Füllprozesses wird nun entweder vor der Füllung mit dem Grundgetränk aus dem Ringkessel 63 oder gleichzeitig mit diesem die jeweils benötigten Aromastoffe über die Zulaufventile 65, 66, 67, 68 eindosiert. Der Befüllvorgang mit den Aromastoffen wird dabei kürzer gehalten als die Fülldauer für das Grundgetränk selbst. Dadurch wird am Ende der Befüllung lediglich das reine Grundgetränk abgefüllt, sodass das Füllrohr 77 freigespült wird, um keinerlei Aromaübertragung in die nächste Flasche zuzulassen. Somit lassen sich digital jede einzelne Flasche mit einem anderen Getränk oder einer anderen Getränkemischung befüllen.

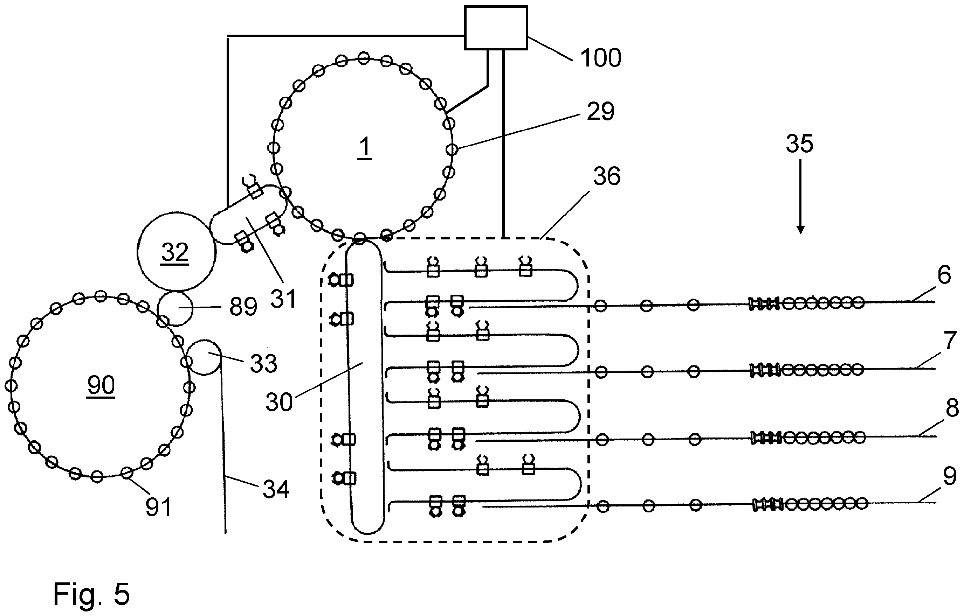

Fig. 5 zeigt eine schematische Darstellung einer Modifikation der zweiten Ausführungsform der erfindungsgemäßen Abfüllanlage aus Fig. 3. Gleiche Elemente werden mit den gleichen Bezugszeichen gekennzeichnet und werden nicht erneut beschrieben.

Die Modifikation gemäß Fig. 5 weist zusätzlich zu Fig. 3 ein Dekorierungssystem 90 auf. Das Dekorierungssystem 90 ist in diesem Beispiel als eine Karussellvorrichtung ausgestaltet, ähnlich wie das Füllerkarussell 1. Ähnlich wie das Füllerkarussell 1 weist es universelle Behandlungspositionen 91 auf. Die universellen Behandlungspositionen 91 sind jeweils zur Aufnahme aller Flaschenarten 2, 3, 4, 5 eingerichtet.

In diesem Fall schließt der Auslaufstern 33 direkt an das Dekorierungssystem 90 an. Genauer gesagt kämmen die Behandlungspositionen 91 eingangsseitig mit einem Übergabestern 89 und ausgangsseitig mit dem Auslaufstern 33.

Ähnlich wie bei dem Füllerkarussell 1 weist jede Behandlungsposition 91 des Dekorierungssystems 90 einen servomotorisch höhenverstellbaren Standteller auf. Nach der Abgabe einer fertig dekorierten Flasche aus einer der Behandlungsstationen 91 wird deren Standteller automatisch auf ein Übergabeniveau für die neu aufzunehmende Flasche verfahren. Deshalb können auch in dem Dekorierungssystem 90 Flaschen der unterschiedlichen Flaschenarten 2, 3, 4, 5 mündungsgleich und in beliebiger Reihenfolge hintereinander behandelt werden.

Das Dekorierungssystem 90 ist dazu eingerichtet, die Flaschen individuell zu dekorieren, beispielsweise zur Dekoration der Flaschen zumindest mit den entsprechenden notwendigen Angaben bezüglich Inhalt, Mischungsverhältnis, Flaschenvolumen, gesetzlichen Vorgaben und/oder Merkmalen für Logistik. Bei dem Dekorierungssystem 90 kann es sich beispielsweise um eine Etikettierung und/oder eine Direktdruckmaschine handeln. Das individuelle Dekor kann richtet sich nach der Flaschengröße, dem Flascheninhalt des Produkts, den gesetzlichen Vorgaben und/oder nach aufzubringenden Codes für automatische Erkennungssysteme. Solche Codes können beispielsweise in der nachfolgenden Logistik eine Rolle spielen. Codes können alternativ oder zusätzlich für die Steuerung nachfolgender Flaschenbehandlungsmaschine derselben Abfüllanlage genutzt werden.

In dieser Modifikation bilden der Verschließer 32 und das Dekorierungssystem 90 jeweils eine weitere Flaschenbehandlungsvorrichtung, die der ersten Flaschenbehandlungsvorrichtung hinter dem Sortierer 36, also in diesem Fall dem Füllerkarussell 1, in Reihe nachgeschaltet sind.

In Fig. 5 ist zusätzlich zu Fig. 3 ein zentrales Steuerungssystem 100 der Abfüllanlage dargestellt. Das Steuerungssystem 100 ist beispielsweise zumindest mit dem Sortierer 36, dem Füllerkarrusell 1 und dem Entnahmesystem (der Entnahmeeinrichtung 31) verbunden. Das erlaubt es auf einfache Weise, dass Flaschen individuell unterschiedlich viele Umläufe in dem Füllerkarussell 1 fahren können. Zum Beispiel kann eine Flasche mit einem größeren Füllvolumen (eine größere Flasche) zwei Umläufe in dem Füllerkarrusell 1 verbleiben, während eine Flasche mit einem kleineren Füllvolumen (eine kleinere Flasche) bereits nach ihrem ersten Umlauf komplett gefüllt ist und direkt nach ihrem ersten Umlauf von einem Mover der Entnahmeeinrichtung 31 aus dem Füllerkarussell 1 entnommen wird. Die Anzahl der Umläufe in dem Füllerkarussell 1 kann also für verschiedene Flaschen bzw. gewünschte Produkte individuell unterschiedlich sein.

Das führt allerdings dazu, dass die größere Flasche gegenüber der kleineren Flasche in der Reihenfolge nach hinten verschoben wird. Nach dem Füllerkarussell 1 bzw. nach der Entnahmeeinrichtung 31 ist die vorbestimmte Reihenfolge nicht mehr eingehalten. Allgemeiner kann die Abfüllanlage eine Auslass-Reihenfolge der Flaschen an einem Auslass der Abfüllanlage gegenüber der vorbestimmten Reihenfolge am Sortierer 36 verändern, insbesondere wegen unterschiedlicher individueller Behandlungsdauern verschiedener Flaschen.

In das Steuerungssystem 100 werden die einzelnen Aufträge der Kunden inklusive der gewünschten Entladereihenfolge für mindestens eine Abtransporteinheit für die Produkte (wie beispielsweise für einen oder mehrere LKW) eingespeist. Das Steuerungssystem 100 kehrt die die gewünschte Entladereihenfolge um.

Dadurch erhält sie eine gewünschte Auslass-Reihenfolge, mit welcher die fertigen Produkte (die befüllten, verschlossenen und dekorierten Flaschen) am Ende der Abfüllanlage ausgeschleust werden sollen. Dies Auslass-Reihenfolge entspricht also einer passenden Beladungs-Reihenfolge für die mindestens eine Abtransporteinheit. Die Steuerung kann alternativ oder zusätzlich dazu eingerichtet sein, dass die Auslass-Reihenfolge manuell vorgebbar und/oder manuell veränderbar ist.

Das Steuerungssystem 100 kalkuliert bevorzugt für jede zu befüllende Flasche die voraussichtliche Gesamt-Behandlungsdauer. Die Gesamt-Behandlungsdauer ist die individuelle Zeit, welche die jeweilige Flasche benötigt, um die Abfüllanlage von dem Sortierer 36 bis zum Ende der Abfüllanlage zu durchlaufen. Alternativ oder zusätzlich kann das Steuerungssystem 100 die Differenzen der Gesamt-Behandlungsdauern berechnen. In diesem Sinne können die Differenzen auch jeweilige Differenzen zu einem Standardwert sein. In Fig. 5 ändert nach dem Sortierer 36 nur das Füllerkarussell 1 die Reihenfolge der Flaschen. Hier genügt es, nur die unterschiedlichen Behandlungsdauern im Füllerkarussell 1 zu berücksichtigen.

Basierend auf der gewünschten Auslass-Reihenfolge und der (Differenzen der) Gesamt-Behandlungsdauern legt das Steuerungssystem 100 die vorbestimmte Reihenfolge derart fest, dass die gewünschte Auslass-Reihenfolge trotz der unterschiedlichen Gesamt-Behandlungsdauern erreicht wird. Ferner steuert das Steuerungssystem 100 den Sortierer 36 derart, dass er die Flaschen in der vorbestimmten Reihenfolge auf die Vorlaufstrecke (hier dem gemischten Schienenbereich 30) aufreiht. Wenn beispielsweise die große Flasche zwei Umläufe im Füllerkarussell fahren muss, legt das Steuerungssystem 100 ihre Position in der vorbestimmten Reihenfolge entsprechend weiter nach vorne.

In einer nicht gezeigten Weiterbildung kann an das Dekorierungssystem 90 statt des Auslaufsterns 33 eine weitere Entnahmeeinrichtung mit Movern anschließen (wie die Entnahmeeinrichtung 31), welche die dekorierten Flaschen selektiv aus dem Dekorierungssystem 90 entnimmt. Das erlaubt es, dass einzelne Flaschen in dem Dekorationssystem 90 individuell und selektiv eine oder mehrere Umläufe fahren können. Wenn das Dekorieren für eine Flasche mehr Zeit erfordert, kann diese beispielsweise für zwei oder mehr Umläufe im Dekorierungssystem 90 verbleiben. In diesem Fall ist das Steuerungssystem 100 bevorzugt auch mit dem Dekorierungssystem 90 und dessen Entnahmesystem verbunden und berücksichtigt. Das Steuerungssystem 100 wird dann zusätzlich individuelle Behandlungsdauern der Flaschen in dem Dekorierungssystem 90 bei der Bestimmung der vorbestimmten Reihenfolge berücksichtigen.

Das Steuerungssystem 100 kann ferner mit einem, mehreren oder allen Bereitstellern 35 verbunden sein (nicht gezeigt). So kann das Steuerungssystem 100 auch die jeweiligen Bereitsteller 35 überwachen und/oder steuern. Das gleiche gilt bezüglich dem Verschließerkarussell 32, dem Übergabestern 89, dem Auslaufstern 33 und dem/oder dem Abtransportband 34.

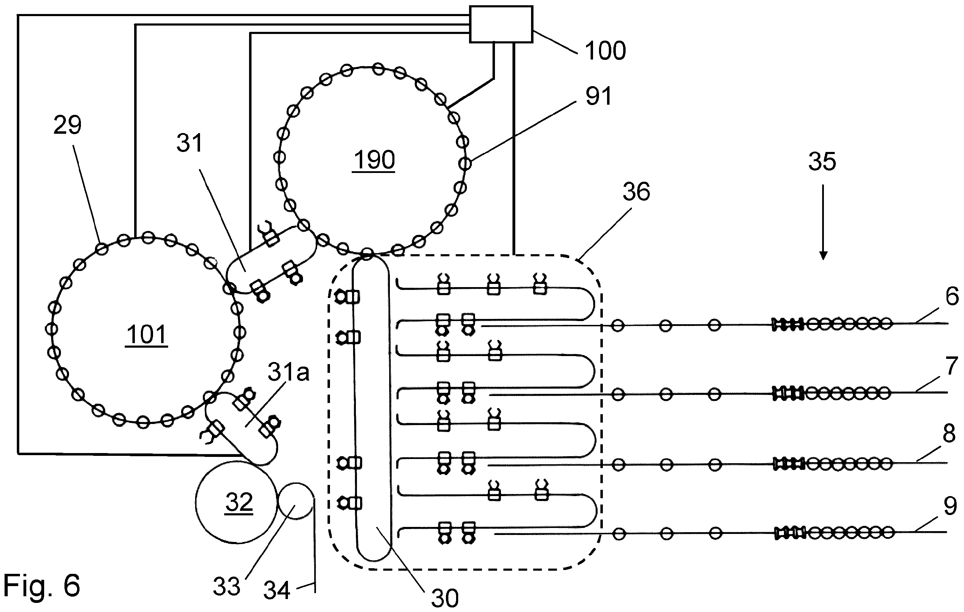

Fig. 6 zeigt eine schematische Darstellung einer dritten Ausführungsform einer erfindungsgemäßen Abfüllanlage. Gleiche Elemente wie bei der zweiten Ausführungsform in Fig. 3 oder deren Modifikation gemäß Fig. 5 werden mit den gleichen Bezugszeichen gekennzeichnet und nicht erneut beschrieben, sofern nichts anderes angegeben ist.

In Fig. 6 ist dem Sortierer 36 ein Dekorierungssystem 190 direkt nachgeschaltet. Hier bildet also das Dekorierungssystem 190 die erste Flaschenbehandlungsvorrichtung nach dem Sortierer 36.

Das Dekorierungssystem 190 ist in diesem Beispiel wie das Dekorierungssystem 90 aus Fig. 5 ausgeführt, sofern nichts anderes angegeben ist. So ist auch das Dekorierungssystem 190 als Karussellvorrichtung ausgebildet und weist eine Vielzahl von einzelnen Behandlungsstationen 91 auf, die an einem Außenumfang des Dekorierungssystems 190 reihum angeordnet sind. Erneut weist jede der Behandlungsstationen 91 jeweils einen höhenverstellbaren Standteller auf.

Der gemischte Schienenbereich 30 kämmt an einem Übergabepunkt mit dem Dekorierungssystem 190 zur Übergabe der Flaschen. Hier fahren die Schlitten 18, 19, 20, 21 in der vorbestimmten Reihenfolge nacheinander an den Übergabepunkt zwischen dem gemischten Schienenbereich 30 und dem Dekorierungssystem 190, um dort ihre Flaschen in die jeweils vorgesehenen Behandlungspositionen 91 zu übergeben.

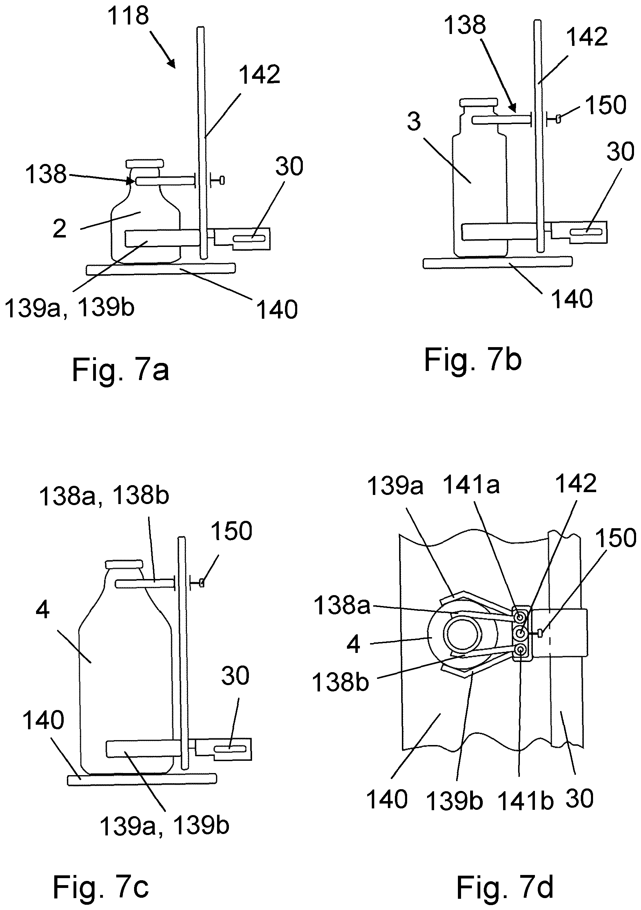

Die Flaschen umlaufen dann das Dekorierungssystem 190 in den einzelnen Behandlungspositionen 91 gegen den Uhrzeigersinn. Die Flaschen werden nach einer individuellen Anzahl von Umläufen durch die Entnahmeeinrichtung 31 selektiv aus dem Dekorierungssystem 190 entnommen. Wie zuvor weißt die Entnahmeeinrichtung 31 universelle Mover bzw. Schlitten für alle Flaschenarten 2, 3, 4, 5, auf, beispielsweise Schlitten 27 der in Fig. 2c gezeigten Art und/oder Schlitten 118 der in Fig. 7a bis 7d gezeigten Art.

In der dritten Ausführungsform übergibt die Entnahmeeinrichtung 31 die Flaschen von dem Dekorierungssystem 190 an ein Füllerkarussell 101. Das Füllerkarussell 101 ist dem Dekorierungssystem 190 als eine weitere Flaschenbehandlungsvorrichtung nachgeschaltet. Das hat den Vorteil, dass die Flaschen beim Dekorieren noch nicht gefüllt und daher weniger Gewicht haben. Sie können leichter bewegt, beschleunigt, und gebremst werden. Das senkt unter anderem den Energieverbrauch für das Dekorieren und verbessert somit die CO₂-Bilanz.

Das Füllerkarussell 101 ist wie das Füllerkarussell 1 in den Fig. 1, 3 und 5 ausgebildet. Insbesondere weist es dieselbe Art von Behandlungs- bzw. Befüllungspositionen 29 auf.

An das Füllerkarussell 101 schließt ein weiteres Entnahmesystem (eine weitere Entnahmeeinrichtung 31a) an. Die Entnahmeeinrichtung 31a ist wie die Entnahmeeinrichtung 31 ausgebildet. Sie ist dazu eingerichtet, die Flaschen selektiv aus den Behandlungspositionen 29 des Füllerkarussells 101 zu entnehmen und an den Verschließer 32 zu übergeben. Mit anderen Worten kämmt die Entnahmeeinrichtung 31a (genauer gesagt dessen Mover bzw. Schlitten) einerseits mit dem Füllerkarussell 101 und andererseits mit dem Verschließer 32. Die Flaschen können dabei eine individuelle Anzahl von Umläufen im Füllerkarussell 101 verbleiben.

Auf den Verschließer 32 folgen wie in Fig. 1 der Auslaufstern 33 und das Abtransportband 34. In Weiterbildungen können noch eine oder mehrere weitere Flaschenbehandlungsvorrichtungen in der Abfüllanlage folgen, beispielsweise ein separater Verschlussbedrucker.

In der dritten Ausführungsform ermöglicht die Abfüllanlage für die einzelnen Flaschen individuelle Behandlungsdauern sowohl in dem Dekorierungssystem 190 als auch in dem Füllerkarussell 101.

Entsprechend ist das Steuerungssystem 100 hier beispielsweise zumindest mit dem Sortierer 36, dem Dekorierungssystem 190, der Entnahmeeinrichtung 31, dem Füllerkarussell 101 und dem zweiten Entnahmesystem 31a verbunden und dazu eingerichtet, diese Vorrichtungen zu steuern. Das Steuerungssystem 100 ist dazu eingerichtet, die individuellen Behandlungsdauern für die Flaschen im Dekorierungssystem 190 und/oder im Füllerkarussell 101 zu berücksichtigen, insbesondere bei der Festlegung der vorbestimmten Reihenfolge für den Sortierer 36. Insbesondere ist das Steuerungssystem 100 hier dazu eingerichtet, die individuellen Gesamt-Behandlungsdauern (oder zumindest die Differenzen der Gesamt-Behandlungsdauern) für die Flaschen zu berechnen und bei der Bestimmung der vorbestimmten Reihenfolge für den Sortierer 36 derart zu berücksichtigen. Das Steuerungssystem 100 steuert den Sortierer 36 dementsprechend.

So kann das Steuerungssystem 100, wie zuvor mit Bezug auf Fig. 5 erklärt wurde, beispielsweise die gewünschte Auslass-Reihenfolge bzw. Belade-Reihenfolge für die mindestens eine Abtransporteinheit erreichen.

Ferner ist das Steuerungssystem 100 hier dazu eingerichtet, eine variable Umdrehungsgeschwindigkeit des Dekorierungssystems 190 und/oder eine variable Umdrehungsgeschwindigkeit des Füllerkarussells 101 zu steuern.

Wenn beispielsweise gerade nur oder überwiegend Flaschen mit einem großen Füllvolumen im Füllerkarussell 101 befüllt werden, kann die Steuerung 101 die Umdrehungsgeschwindigkeit des Füllerkarussells 101 soweit reduzieren, dass die großen Flaschen in nur einem Umlauf befüllt werden. Dann müssen nicht alle großen Flaschen zwei oder mehr Umläufe im Füllerkarussell 101 verbleiben.

Selbstverständlich lassen sich die Modifikation gemäß Fig. 5 und die Änderungen der in Fig. 5 gezeigten, dritten Ausführungsform analog auch auf die erste Ausführungsform aus Fig. 1 übertragen.

Fig. 7a bis 7d zeigen einen universellen Mover bzw. einen universellen Schlitten 118 gemäß einer zweiten Ausführungsform.

Der Schlitten 118 hat einen Servomotor und kann sich individuell auf der Schiene 30 bewegen. Die Schiene 30 läuft in der Darstellung der Fig. 7a bis 7c aus der Zeichenebene heraus.

Der Schlitten 118 ist mit einem Greifer ausgestattet. Der Greifer weist eine obere Greifzange 138 mit zwei Greifarmen 138a, 138b sowie eine untere Greifzange mit zwei Greifarmen 139a, 139b auf.

Die oberen Greifarme 138a, 138b rotieren um eine jeweilige Drehachse 141a bzw. 141b und weisen eine V-förmige Hand zum Greifen der Flaschen von zwei Seiten auf (siehe Fig. 7d). Durch die V-förmige Hand und eine synchrone Schließbewegung der Greifarme 138a, 138b werden verschiedene Flaschendurchmesser jeweils auf eine gemeinsame Mitte zentriert. Das gleiche gilt entsprechend für die unteren Greifarme 139a, 139b.

Zwischen den Drehaufnahmen der Greifarme 138a, 138b ist eine Schiene 142 zur Höhenverstellung der oberen Greifzange 138 angeordnet. Ferner ist an der oberen Greifzange 138 ein Angriffselement 150 für eine Kulissenführung 160 angeordnet. In diesem Fall steht das Angriffselement 150 an einer den beiden oberen Greifarmen 138a, 138b abgewandten Seite hervor. Das Angriffselement 150 erlaubt es auf einfache Weise, die Höhe der oberen Greifzange 138 mittels der Kulissenführung 160 zur verstellen.

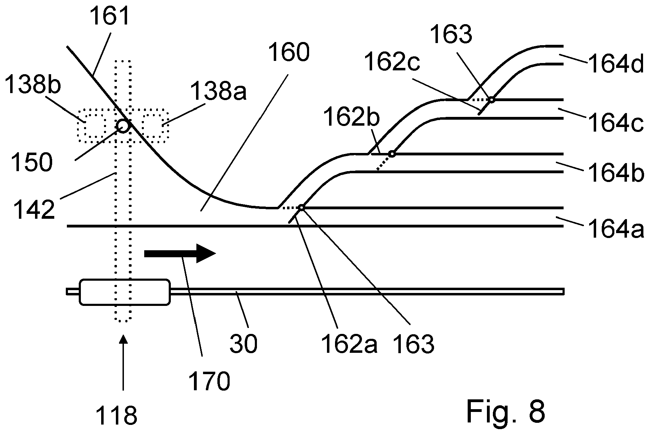

Ein Beispiel für eine Kulissenführung 160 zur Höhenverstellung der oberen Greifzange 138 des Schlittens 118 ist in Fig. 8 dargestellt.

In diesem Fall ist die obere Greifzange 138 mit den Greifarmen 138a, 138b in der Höhe verstellbar. Dadurch ist der Greifer des Schlittens 118 dynamisch an verschiedene Flaschengrößen anpassbar.

In der gezeigten Ausführung haben die obere Greifzange 138 und die untere Greifzange gemeinsame Drehachsen 141a, 141b. In einer Modifikation können separate Drehachsen für die unteren Greifer vorgesehen sein (nicht gezeigt). Beispielsweise können die Drehachsen der unteren Greifzange etwas weiter auseinander angeordnet sein als die Drehachsen 141a, 141b der oberen Greifzange 138, da Flaschen typischerweise in einem unteren Viertel einen größeren Durchmesser aufweisen als in einem oberen Viertel.

Bevorzugt greift die untere Greifzange die Flasche jeweils in einem unteren Viertel der Flasche und die obere Greifzange 138 in einem oberen Viertel.

In Fig. 7a führt der Schlitten 118 eine Flasche der ersten Flaschenart 2, in Fig. 7b eine Flasche der zweiten Flaschenart 3 und in Fig. 7c und 7d eine Flasche der dritten Flaschenart 4. Auch wenn dies nicht gesondert dargestellt ist, kann der Schlitten 118 selbstverständlich auch Flaschen der vierten Flaschenart 5 führen.

Anders als die zuvor beschriebenen Schlitten 18, 19 und 27 weist der Schlitten 118 selbst keine Standfläche auf. Stattdessen werden die Flaschen durch den Schlitten 118 auf einer Rutschfläche 140 stehend verschoben. Der Schlitten 118 als solcher muss nicht das Gewicht der darin transportierten Flasche tragen. Die Rutschfläche 140 kann als Teil des Schienensystems betrachtet werden.

Beispielsweise können der Sortierer 36, die Entnahmeeinrichtung 31 und/oder die Entnahmeeinrichtung 31a jeweils einen oder mehrere der Schlitten 118 aufweisen.

Der Schlitten 118 bzw. die Schlitten 118 sind eingerichtet zum bodengeführten, bodengleichen Transport von Flaschen. Wie aus den Fig. 7a bis 7c erkennbar ist werden die Flaschen der unterschiedlichen Flaschenarten 2, 3 und 4 bodengleich in dem Schlitten 118 geführt bzw. durch den Schlitten 118 transportiert. Dasselbe gilt auch für die vierte Flaschenart 5.

Ähnlich wie für die in Fig. 2a und 2b können auch unterschiedliche, flaschenangepasste Schlitten für die unterschiedlichen Flaschenarten 2, 3, 4, 5 zum bodengleichen Transport der Flaschen vorgesehen sein, die ähnlich dem Schlitten 118 sind, bei denen die obere Greifzange aber gar nicht oder nur manuell höhenverstellbar ist. Zur Anpassung an die verschiedenen Flaschenarten 2, 3, 4, 5 sind die obere Greifzangen der verschiedenen Schlitten dann fest auf unterschiedliche Höhen eingestellt. Natürlich können in demselben Sortierer 36, Entnahmesystem 31 und/oder Entnahmesystem 31a beispielsweise universelle Schlitten 118 und solche flaschenangepassten Schlitten zum bodengleichen Transport gleichzeitig genutzt werden.

Fig. 8 zeigt schematisch eine Kulissenführung 160 zur Einstellung der Höhe der oberen Greifzange 138 der Schlitten 118. Wenn einer der Schlitten 118 die Kulissenführung 160 entlang einer Durchfahrrichtung 170 durchfährt, dann greift sein Angriffselement 150 in die Kulissenführung 160. Die Kulissenführung 160 weist entlang einer Durchfahrrichtung 170 zunächst einen Rückstellbereich 161 auf. Dadurch wird die Höhe der oberen Greifzange 138 auf eine Standardhöhe gebracht. Wenn die Höhe bereits der Standardhöhe entspricht, wird sie selbstverständlich an dieser Stelle nicht verändert.

Weiter hinten entlang der Durchfahrrichtung 170 verzweigt sich die Kulissenführung 160 in mehrere Höheneinstellgassen. In diesem Fall weist die Kulissenführung 160 vier Höheneinstellgassen 164a bis 164d auf. Die Höheneinstellgassen 164a bis 164d entsprechen unterschiedlichen Höheneinstellungen der oberen Greifzange 138 mit den oberen Greifarmen 138a, 138b.

Genauer im Detail betrachtet folgt nach dem Rückstellbereich 161 zunächst eine erste Abzweigung, an welcher eine zweite Höheneinstellgasse 164b von einer ersten Höheneinstellgasse 164a abzweigt. An der Abzweigung ist eine erste Klappe 162a zur Richtungsänderung für das Angriffselement 150 vorgesehen. Die erste Klappe 162a ist verschwenkbar an einer Drehlagerung 163 angebracht. Die erste Klappe 162a kann mittels eines Motors zwischen einer ersten Position und einer zweiten Position verschwenkt werden. In der ersten Position blockiert sie die Abzweigung zu der zweiten Höheneinstellgasse 164b und gibt einen Endbereich der ersten Höheneinstellgasse 164a frei. Diese erste Position der ersten Klappe 162a ist in Fig. 8 mit einer gestrichelten Linie dargestellt. In der zweiten Position, die in Fig. 8 mittels der durchgezogenen Linie dargestellt ist, blockiert die erste Klappe 162a den Endbereich der ersten Höheneinstellgasse 164a und gibt die Abzweigung zur zweiten Höheneinstellgasse 164b frei.

Wenn das Angriffselement 150 die erste Klappe 162a erreicht, während sich die erste Klappe 162a in ihrer ersten Position befindet, lenkt die erste Klappe 162a das Angriffselement 150 nicht ab. Das Angriffselement 150 wird durch den Endbereich der ersten Höheneinstellgasse 164a geführt. Das Angriffselement 150 und die obere Greifzange 138 verbleiben auf der Standardhöhe. Die Kulissenführung 160 stellt die obere Greifzange 138 in diesem Fall also auf eine erste Höhe ein (die Standardhöhe), beispielsweise für die erste Flaschenart 2.

Wenn das Angriffselement 150 die erste Klappe 162a erreicht, während sich die erste Klappe 162a in ihrer zweiten Position befindet, lenkt die erste Klappe 162a das Angriffselement 150 in die zweite Höheneinstellgasse 164b ab. Dadurch werden das Angriffselement 150 und somit auch die obere Greifzange 138 nach oben verschoben. Die obere Greifzange 138 wird also auf eine zweite Höhe eingestellt, die größer ist als die erste Höhe, beispielsweise für die zweite Flaschenart 3. Kurz nach ihrem Beginn folgt in der zweiten Höheneinstellgasse 164b eine zweite Abzweigung, an welcher eine dritte Höheneinstellgasse 164c von der zweiten Höheneinstellgasse 164b abzweigt. An der zweiten Abzweigung ist eine zweite Klappe 162b zur Richtungsänderung für das Angriffselement 150 angebracht, die wie die erste Klappe 162a aufgebaut ist und funktioniert. In einer ersten Position blockiert die zweite Klappe 162b die Abzweigung zu der dritten Höheneinstellgasse 164c und gibt einen Endbereich der zweiten Höheneinstellgasse 164b frei. Diese erste Position der zweiten Klappe 162b ist in Fig. 8 mit einer gestrichelten Linie dargestellt. In ihrer zweiten Position, die in Fig. 8 mittels der durchgezogenen Linie dargestellt ist, blockiert die zweite Klappe 162b den Endbereich der zweiten Höheneinstellgasse 164b und leitet das Angriffselement an der zweiten Abzweigung in die dritte Höheneinstellgasse 164c. Die zweite Klappe 162b ist also dazu eingerichtet, dass Angriffselement 150 wahlweise in den Endbereich der zweiten Höheneinstellgasse 164b oder in die dritte Höheneinstellgasse 164c zu leiten. Dadurch kann die obere Greifzange 138 wahlweise auf die zweite Höhe oder auf eine dritte Höhe eingestellt werden, welche der dritten Höheneinstellgasse 164c entspricht und für die dritte Flaschenart 4 geeignet ist.

Entsprechend folgt in der dritten Höheneinstellgasse 164c eine dritte Abzweigung zu einer vierten Höheneinstellgasse 164d. Die dritte Abzweigung weist eine dritte Klappe 162c auf, die wie die erste Klappe 162a und die zweite Klappe 162b aufgebaut ist und funktioniert. So kann die obere Greifzange 138 wahlweise auf die dritte Höhe oder auf eine vierte Höhe eingestellt werden, welche der vierten Höheneinstellgasse 164d entspricht und für die vierte Flaschenart 5 geeignet ist.

In diesem Beispiel kann die Kulissenführung 160 die obere Greifzange 138 der Schlitten 118 wahlweise auf eine von vier unterschiedlichen Höhen einstellen, wobei jede dieser Höhen einer anderen der vier Flaschenarten 2, 3, 4, 5 entspricht. In anderen Weiterbildungen kann die Kulissenführung mehr oder weniger Höheneinstellgassen aufweisen. Zudem kann die Standardhöhe beispielsweise der größten Höhe entsprechen statt - wie es in Fig. 8 der Fall ist - der geringsten.

Eine solche Kulissenführung 160 kann beispielsweise in dem gemischten Schienenbereich 30 und/oder in dem Entnahmesystem 31 in Fig. 1 vorgesehen sein.

Bevorzugt ist das Steuerungssystem 100 mit der Kulissenführung 160 verbunden sein und dazu eingerichtet sein, die Kulissenführung 160 zu steuern. Insbesondere steuert das Steuerungssystem 100 die Motoren für das Verschwenken der Klappen 162a, 162b und 162c.

In einer anderen Modifikation weisen die Schlitten 118 jeweils einen Motor zur Einstellung der Höhe der oberen Greifzange 138 auf.

Die vorliegende Erfindung ermöglicht eine flexible, bedarfsgerechte Abfüllung von Flaschen unterschiedlicher Flaschenarten in einer Produktionslinie. Verschiedene Produkte können in beliebiger Reihenfolge und in beliebigen Anteilen in derselben Produktionslinie im Mischbetrieb fertiggestellt werden. Das sorgt für eine Reduzierung der erforderlichen Lagerflächen, des Energieverbrauchs, des CO₂-Äquivalents und der Kosten.

### Bezugszeichentabelle:

- 1, 101: Füllerkarussell
- 2: Erste Flaschenart
- 3: Zweite Flaschenart
- 4: Dritte Flaschenart
- 5: Vierte Flaschenart
- 6: Zulauftransporteur erste Flaschenart
- 7: Zulauftransporteur zweite Flaschenart
- 8: Zulauftransporteur dritte Flaschenart
- 9: Zulauftransporteur vierte Flaschenart
- 10: Zuteilungsschnecke erste Flaschenart
- 11: Zuteilungsschnecke zweite Flaschenart
- 12: Zuteilungsschnecke dritte Flaschenart
- 13: Zuteilungsschnecke vierte Flaschenart
- 14: Beschleunigungsstrecke erste Flaschenart
- 15: Beschleunigungsstrecke zweite Flaschenart
- 16: Beschleunigungsstrecke dritte Flaschenart
- 17: Beschleunigungsstrecke vierte Flaschenart
- 18: Schlitten mit Greifer erste Flaschenart
- 19: Schlitten mit Greifer zweite Flaschenart
- 20: Schlitten mit Greifer dritte Flaschenart
- 21: Schlitten mit Greifer vierte Flaschenart
- 22: sortenreiner Schienenbereich erste Flaschenart
- 23: sortenreiner Schienenbereich zweite Flaschenart
- 24: sortenreiner Schienenbereich dritte Flaschenart
- 25: sortenreiner Schienenbereich vierte Flaschenart
- 26: linearer Transporteur
- 27: Schlitten mit Greifer für verschiedene Flaschenarten
- 28: Warte- und Pufferpositionen vor Füller
- 29: Befüllungsposition
- 30: gemischter Schienenbereich
- 31, 31a: Entnahmeeinrichtung
- 32: Verschließerkarussell
- 33: Auslaufstern
- 34: Abtransportband für volle Flaschen
- 35: Bereitsteller
- 36: Sortierer
- 37: Greifer
- 38a, 138a: erster Greifarm obere Greifzange
- 38b, 138b: zweiter Greifarm obere Greifzange
- 39a, 139a: erster Greifarm untere Greifzange
- 39b, 139b: zweiter Greifarm untere Greifzange
- 40: Bodenunterstützung für Flasche
- 41a, 141a: Antriebsachse erste Greifarme
- 41b, 141b: Antriebsachse zweite Greifarme
- 42, 142: Schiene für Höhenverstellung
- 43: Ebene Mündungshöhe
- 48: Zulaufweiche erste Flaschenart
- 49: Zulaufweiche zweite Flaschenart
- 50: Zulaufweiche dritte Flaschenart
- 51: Zulaufweiche vierte Flaschenart
- 52: Pufferstrecke vor Füller
- 53: Rücklaufweiche erste Flaschenart
- 54: Rücklaufweiche zweite Flaschenart
- 55: Rücklaufweiche dritte Flaschenart
- 56: Rücklaufweiche vierte Flaschenart
- 57: Pufferbereich erste Flaschenart
- 58: Pufferbereich zweite Flaschenart
- 59: Pufferbereich dritte Flaschenart
- 60: Pufferbereich vierte Flaschenart
- 63: Ringkessel Grundgetränk
- 64: Drehdurchführung Grundgetränk
- 65: Zulaufventil erster Aromastoff
- 66: Zulaufventil zweiter Aromastoff
- 67: Zulaufventil dritter Aromastoff
- 68: Zulaufventil vierter Aromastoff
- 69: Drehdurchführung erster Aromastoff
- 70: Drehdurchführung zweiter Aromastoff
- 71: Drehdurchführung dritter Aromastoff
- 72: Drehdurchführung vierter Aromastoff
- 73: Ringkessel erster Aromastoff
- 74: Ringkessel zweiter Aromastoff
- 75: Ringkessel dritter Aromastoff
- 76: Ringkessel vierter Aromastoff
- 77: Füllrohr
- 78: Flaschenzentrierkonus mit Abdichtung
- 79: Standteller
- 80: servomotorische Höhenverstellung
- 81: Mittelachse Füllerkarussell
- 82: Entlüftung
- 89: Übergabestern
- 90, 190: Dekorierungssystem
- 91: Behandlungsposition
- 100: Steuerungssystem
- 118: Schlitten
- 138: obere Greifzange
- 140: Rutschfläche
- 150: Angriffselement
- 160: Kulissenführung
- 161: Rückstellbereich
- 162a: erste Klappe
- 162b: zweite Klappe
- 162c: dritte Klappe
- 163: Drehlagerung
- 164a: erste Höheneinstellgasse
- 164b: zweite Höheneinstellgasse
- 164c: dritte Höheneinstellgasse
- 164d: vierte Höheneinstellgasse

## Patentansprüche

1. Abfüllanlage zur bedarfsangepassten Behandlung von Flaschen, aufweisend:
mindestens eine Flaschenbehandlungsvorrichtung (1; 190);
einen ersten Bereitsteller (35), der eine erste Flaschenart (2, 3, 4, 5) bereitstellt;
zumindest einen weiteren Bereitsteller (35), der eine erste weitere Flaschenart (2, 3, 4, 5) bereitstellt, wobei sich die erste weitere Flaschenart (2, 3, 4, 5) in der Form und/oder in der Größe von der ersten Flaschenart (2, 3, 4, 5) unterscheidet;
einen Sortierer (36), der dazu eingerichtet ist, Flaschen selektiv beliebig aus jedem der Bereitsteller (35) zu entnehmen,
und die Flaschen in einer vorbestimmten Reihenfolge geordnet auf einer Vorlaufstrecke aufzureihen und sie der Flaschenbehandlungsvorrichtung (1; 190) in der vorbestimmten Reihenfolge zuzuführen,
wobei die vorbestimmte Reihenfolge frei wählbar ist, und
wobei der Sortierer (36) mehrere unabhängig und individuell angetriebene Mover (18, 19, 20, 21, 27, 118) aufweist,
**dadurch gekennzeichnet, dass** die Flaschenbehandlungsvorrichtung (1; 190) als Karussellvorrichtung ausgebildet ist und dass die Abfüllanlage ein Entnahmesystem (31) zur Entnahme der Flaschen aus der Flaschenbehandlungsvorrichtung (1; 190) aufweist, wobei eine Anzahl von Umläufen in der Flaschenbehandlungsvorrichtung (1; 190) für jede Flasche individuell steuerbar ist und,
dass jeder Mover (18, 19, 20, 21, 27, 118) einen Greifer (37) zur Entnahme einer Flasche von den Bereitstellern (35) und/oder zur Zuführung der Flasche in die Flaschenbehandlungsvorrichtung (1; 190) aufweist.

2. Abfüllanlage nach Anspruch 1, **gekennzeichnet durch** ein Steuerungssystem (100), welche dazu eingerichtet ist, die vorbestimmte Reihenfolge anhand einer frei wählbaren Auslass-Reihenfolge, mit welcher die fertig behandelten Flaschen die Abfüllanlage verlassen sollen, zu bestimmen,
wobei das Steuerungssystem (100) dazu eingerichtet ist, bei der Bestimmung der vorbestimmten Reihenfolge unterschiedliche Behandlungsdauern für verschiedene Flaschen in der Abfüllanlage zu berücksichtigen.

3. Abfüllanlage nach einem der vorhergehenden Ansprüche, **dadurch gekennzeichnet, dass** die Flaschenbehandlungsvorrichtung (1; 190) mehrere Behandlungspositionen (29; 91) zur Behandlung von jeweils einer Flasche aufweist, wobei die einzelnen Behandlungspositionen (29; 91) universell zur Aufnahme aller unterschiedlichen Flaschenarten (2, 3, 4, 5) ausgeführt sind und wobei der Sortierer (36) dazu eingerichtet ist, die Flaschen von der Vorlaufstrecke einzelnen Behandlungspositionen (29; 91) der Flaschenbehandlungsvorrichtung (1;190) in der vorbestimmten Reihenfolge zuzuführen.

4. Abfüllanlage nach einem der vorhergehenden Ansprüche, **dadurch gekennzeichnet, dass** der Sortierer (36) einen ersten sortenreinen Schienenbereich (22, 23, 24, 25) aufweist, der an dem ersten Bereitsteller (35) angeordnet und diesem zugeordnet ist und
mindestens einen ersten weiteren sortenreinen Schienenbereich (22, 23, 24, 25) aufweist, der an dem mindestens einen weiteren Bereitsteller (35) angeordnet und diesem zugeordnet ist,
derart, dass ein Mover (18, 19, 20, 21) in dem jeweiligen Schienenbereich (22, 23, 24, 25) die Flaschen von dem jeweiligen Bereitsteller (35) übernehmen kann.

5. Abfüllanlage nach Anspruch 4, **dadurch gekennzeichnet, dass** der Mover (18, 19, 20, 21) von dem jeweiligen sortenreinen Schienenbereich (22, 23, 24, 25) über eine Weiche (48, 49, 50, 51, 53, 54, 55, 56) auf die Vorlaufstrecke wechseln kann, die einen gemischten Schienenbereich (30), welcher ein Schienenbereich ist, auf dem gleichzeitig verschiedene Flaschenarten (2, 3, 4, 5) transportiert werden, aufweist,
wobei der gemischte Schienenbereich (30) zumindest in einem Teilbereich mit der Flaschenbehandlungsvorrichtung (1; 190) kämmt, in welchem Flaschen an die Flaschenbehandlungsvorrichtung (1; 190) übergeben werden.

6. Abfüllanlage nach einem der vorhergehenden Ansprüche, **dadurch gekennzeichnet, dass** der Greifer (37) eine erste Greifzange mit zwei sich gegenüberstehenden Greifarmen (38a, 38b; 139a, 139b) aufweist, die zum Schließen des Greifers (37) aufeinander zu bewegbar sind,
wobei der Greifer (37) eine oberhalb oder unterhalb der ersten Greifzange angeordnete, in der Höhe verstellbare, zweite Greifzange (138; 39a, 39b) aufweist.

7. Abfüllanlage nach einem der vorhergehenden Ansprüche, **dadurch gekennzeichnet, dass** die Abfüllanlage ein Füllerkarussell (1; 101) mit mehreren Befüllungspositionen (29) aufweist.

8. Abfüllanlage nach Anspruch 7, **dadurch gekennzeichnet, dass** das Füllerkarussell (1) die Flaschenbehandlungsvorrichtung ist.

9. Abfüllanlage nach Anspruch 7 oder 8, **dadurch gekennzeichnet, dass** das Füllerkarussell (1) eine Getränkeversorgung für zumindest ein Grundgetränk und zumindest ein Mischgetränk aufweist, wobei auf dem Füllerkarussell (1) dazu eingerichtet ist, individuell für jede Flasche aus dem Grundgetränk und dem Mischgetränk ein Getränk zu mischen und in eine Flasche in der Befüllungsposition (29) abzufüllen.

10. Abfüllanlage nach Anspruch 9, **dadurch gekennzeichnet, dass** das Füllerkarussell (1)
zumindest einen Ringkessel (63) für das Grundgetränk und je einen Abfüllauslass für die mehreren Befüllungspositionen (29) und je eine Hauptleitung (77) von dem zumindest einen Ringkessel (63) für das Grundgetränk und zumindest eine in die Hauptleitung führende, kleinere Nebenleitung für das Mischgetränk mit jeweils regelbaren Ventilen (65, 66, 67, 68) aufweist,
wobei die Abfüllanlage dazu eingerichtet ist, die Befüllung durch die regelbaren Ventile (65, 66, 67, 68) derart zu steuern, dass das Grundgetränk und das Mischgetränk in einer zeitlichen Abfolge zugeführt werden, wobei die Befüllung durch das reine Grundgetränk ohne Mischgetränk abgeschlossen wird.

11. Abfüllanlage nach einem der vorhergehenden Ansprüche, **gekennzeichnet durch** ein Dekorierungssystem (90; 190) zur Dekorierung der Flaschen, welches dazu eingerichtet ist, die Flaschen unabhängig von deren Reihenfolge selektiv und individuell zu dekorieren, zumindest in Abhängigkeit von der Flaschenart (2, 3, 4, 5) der jeweiligen Flasche und/oder einer Füllung, mit welcher die jeweilige Flasche befüllt wird.

12. Abfüllanlage nach einem der vorhergehenden Ansprüche, **dadurch gekennzeichnet, dass** die Steuerung der Abfüllanlage für deren mechanischen Einstellungen und/oder deren Einstellungen für die Mischungen des Füllguts durch individuelle, auf den Flaschen aufgebrachte Codes erfolgt, die durch zumindest ein Lesegerät detektiert werden.

13. Verfahren zur bedarfsangepassten Zuführung von Flaschen in eine Flaschenbehandlungsvorrichtung (1; 190) einer Abfüllanlage,
wobei durch einen Sortierer (36)
• Flaschen einer ersten Flaschenart (2, 3, 4, 5) von einem ersten Bereitsteller (35) entnommen werden und
• zumindest Flaschen einer ersten weiteren Flaschenart (2, 3, 4, 5) von einem ersten weiteren Bereitsteller (35) entnommen werden, wobei sich die erste weitere Flaschenart (2, 3, 4, 5) in der Form und/oder in der Größe von der ersten Flaschenart (2, 3, 4, 5) unterscheidet,
wobei der Sortierer (36) die Flaschen auf einer Vorlaufstrecke in einer vorbestimmten Reihenfolge aufreiht,
wobei die Flachen von der Vorlaufstrecke in der vorbestimmten Reihenfolge der Flaschenbehandlungsvorrichtung (1; 190) zugeführt werden,
wobei die vorbestimmte Reihenfolge frei wählbar ist, und
wobei der Sortierer (36) mehrere unabhängig und individuell angetriebene Mover (18, 19, 20, 21, 27, 118) aufweist,
**dadurch gekennzeichnet, dass** die Flaschenbehandlungsvorrichtung (1; 190) als Karussellvorrichtung ausgebildet ist und dass die Abfüllanlage ein Entnahmesystem (31) zur Entnahme der Flaschen aus der Flaschenbehandlungsvorrichtung (1; 190) aufweist, wobei eine Anzahl von Umläufen in der Flaschenbehandlungsvorrichtung (1; 190) für jede Flasche individuell gesteuert wird, und,
dass jeder Mover (18, 19, 20, 21, 27, 118) einen Greifer (37) zur Entnahme einer Flasche von den Bereitstellern (35) und/oder zur Zuführung der Flasche in die Flaschenbehandlungsvorrichtung (1; 190) aufweist.

14. Verfahren nach Anspruch 13, **dadurch gekennzeichnet, dass** die vorbestimmte Reihenfolge anhand einer frei wählbaren Auslass-Reihenfolge bestimmt wird, mit welcher die fertig behandelten Flaschen die Abfüllanlage verlassen sollen,
wobei bei der Bestimmung der vorbestimmten Reihenfolge unterschiedliche Behandlungsdauern für verschiedene Flaschen in der Abfüllanlage berücksichtigt wird.

## Claims

1. Filling plant for treating bottles as required, comprising:
at least one bottle treating device (1; 190);
a first supply line (35), which supplies a first bottle type (2, 3, 4, 5);
at least one further supply line (35), which supplies a first further bottle type (2, 3, 4, 5), wherein the first further bottle type (2, 3, 4, 5) differs in the shape and/or in the size from the first bottle type (2, 3, 4, 5);
a sorter (36), which is configured to remove bottles selectively arbitrarily from each of the supply lines (35),
and to line up the bottles arranged in a predetermined order on an infeed section,
and to feed them to the bottle handline device (1; 190) in the predetermined order,
wherein the predetermined order can be chosen freely, and
wherein the sorter (36) comprises several movers (18, 19, 20, 21, 27, 118), which are driven independently and individually,
**characterized in that** the bottle treating device (1; 190) is formed as carousel device and that the filling plant has a removal system (31) for removing the bottles from the bottle treating device (1; 190), wherein a number of cycles in the bottle treating device (1; 190) can be controlled individually for each bottle, and
that each mover (18, 19, 20, 21, 27, 118) comprises a gripper (37) for removing a bottle from the supply lines (35) and/or for feeding the bottle into the bottle treating device (1; 190).

2. The filling plant according to claim 1, **characterized by** a control system (100), which is configured to determine the predetermined order based on a freely-selectable outlet order, in which the bottles, the treatment of which has finished, are to leave the filling plant,
wherein the control system (100) is configured to consider different treatment durations for different bottles in the filling plant when determining the predetermined order.

3. The filling plant according to any one of the preceding claims, **characterized in that** the bottle treating device (1; 190) has several treating positions (29; 91) for treating a bottle, respectively, wherein the individual treating positions (29; 91) are embodied universally for receiving all different bottle types (2, 3, 4, 5), and wherein the sorter (36) is configured to feed the bottles from the infeed section to individual treating positions (29; 91) of the bottle treating device (1; 190) in the predetermined order.

4. The filling plant according to any one of the preceding claims, **characterized in that** the sorter (36) has a first unmixed rail region (22, 23, 24, 25), which is arranged at the first supply line (35) and which is assigned to the latter,
and has at least one first further unmixed rail region (22, 23, 24, 25), which is arranged at the at least one further supply line (35) and which is assigned to the latter,
in such a way that a mover (18, 19, 20, 21) can take over the bottles from the respective supply line (35) in the respective rail region (22, 23, 24, 25).

5. The filling plant according to claim 4, **characterized in that** the mover (18, 19, 20, 21) can change from the respective unmixed rail region (22, 23, 24, 25) via a switch (48, 49, 50, 51, 53, 54, 55, 56) to the infeed section, which has a mixed rail region (30), which is a rail region, on which different bottle types (2, 3, 4, 5) are transported at the same time;
wherein the mixed rail region (30) meshes with the bottle treating device (1; 190) at least in a subregion, in which bottles are transferred to the bottle treating device (1; 190).

6. The filling plant according to any one of the preceding claims, **characterized in that** the gripper (37) has first gripper tongs comprising two opposing gripper arms (38a, 38b; 139a, 139b), which can be moved towards one another for closing the gripper (37),
wherein the gripper (37) has second height-adjustable gripper tongs (138; 39a, 39b), which are arranged above or below the first gripper tongs.

7. The filling plant according to any one of the preceding claims, **characterized in that** the filling plant has a filler carousel (1; 101) comprising several filling positions (29).

8. The filling plant according to claim 7, **characterized in that** the filler carousel (1) is the bottle treating device.

9. The filling plant according to claim 7 or 8, **characterized in that** the filler carousel (1) has a beverage supply for at least one base beverage and at least one mixing beverage, wherein the filler carousel (1) is configured to mix a beverage, individually for each bottle, from the base beverage and the mixing beverage, and to fill it into a bottle in the filling position (29).

10. The filling plant according to claim 9, **characterized in that** the filler carousel comprises at least one annular vessel (63) for the base beverage and, for each of the several filling positions (29), respectively, one filling outlet and a main line (77) from the at least one annular vessel (63) for the base beverage and at least one smaller secondary line for the mixing beverage with respective regulatable valves (65, 66, 67, 68), the secondary line leading into the main line,
wherein the filling plant is configured to control the filling in such a way by means of the regulatable valves (65, 66, 67, 68) that the base beverage and the mixing beverage are fed in a time sequence, wherein the filling is finished with the pure base beverage without mixing beverage.

11. The filling plant according to any one of the preceding claims, **characterized by** a decorating system (90; 190) for decorating the bottles, which is configured to selectively and individually decorate the bottles independently of the order thereof, at least depending on the bottle type (2, 3, 4, 5) of the respective bottle and/or a filling, with which the respective bottle is getting filled.

12. The filling plant according to any one of the preceding claims, **characterized in that** the control of the filling plant for the mechanical settings thereof and/or the settings thereof for the mixtures of the filling material takes place by means of individual codes, which are applied to the bottles and which are detected by means of at least one reader means.

13. A method for feeding bottles as required into a bottle treating device (1; 190) of a filling plant,
wherein, by means of a sorter (36),
• bottles of a first bottle type (2, 3, 4, 5) are removed from a first supply line (35) and
• at least bottles of a first further bottle type (2, 3, 4, 5) are removed from a first further supply line (35), wherein the first further bottle type (2, 3, 4, 5) differs in shape and/or in size from the first bottle type (2, 3, 4, 5),
wherein the sorter (36) lines up the bottles on an infeed section in a predetermined order,
wherein the bottles are fed from the infeed section in the predetermined order to the bottle treating device (1; 190),
wherein the predetermined order can be selected freely, and
wherein the sorter (36) has several movers (18, 19, 20, 21, 27, 118), which are driven independently and individually,
**characterized in that** the bottle treating device (1; 190) is formed as carousel device and that the filling plant has a removal system (31) for removing the bottles from the bottle treating device (1; 190), wherein a number of cycles in the bottle treating device (1; 190) can be controlled individually for each bottle, and
that each mover (18, 19, 20, 21, 27, 118) has a gripper (37) for removing a bottle from the supply lines (35) and/or for feeding the bottle into the bottle treating device (1; 190).

14. The method according to claim 13, **characterized in that** the predetermined order is determined based on a freely selectable outlet order, in which the bottles, the treatment of which has finished, are to leave the filling plant,
wherein different treatment durations for different bottles are considered in the filling plant when determining the predetermined order.

## Revendications

1. Ligne de remplissage, destinée à traiter en fonction des besoins des bouteilles, comportant :
au moins un dispositif de traitement de bouteilles (1 ; 190) ;
un premier système fournisseur (35), qui met à disposition un premier type de bouteilles (2, 3, 4, 5) ;
au moins un autre système fournisseur (35), qui met à disposition un premier autre type de bouteilles (2, 3, 4, 5), le premier autre type de bouteilles (2, 3, 4, 5) se différenciant par la forme et/ou par la taille du premier type de bouteilles (2, 3, 4, 5) et ;
un trieur (36), qui est aménagé pour prélever sélectivement des bouteilles quelconques dans chacun des systèmes fournisseurs (35),
et pour aligner les bouteilles selon un ordre chronologique prédéfini sur un trajet d'avance et pour les amener au dispositif de traitement de bouteilles (1 ; 190) selon l'ordre chronologique prédéfini,
l'ordre chronologique prédéfini étant librement sélectionnable, et
le trieur (36) comportant plusieurs movers (18, 19, 20, 21, 27, 118) entraînés de manière indépendante et individuelle,
**caractérisée en ce que** le dispositif de traitement de bouteilles (1; 190) est conçu sous la forme d'un dispositif à carrousel et **en ce que** la ligne de remplissage comporte un système de prélèvement (31),
destiné à prélever les bouteilles dans le dispositif de traitement de bouteilles (1 ; 190), un nombre de parcours étant susceptible d'être commandé individuellement pour chaque bouteille dans le dispositif de traitement de bouteilles (1 ; 190) et,
**en ce que** chaque mover (18, 19, 20, 21, 27, 118) comporte un grappin (37), destiné à prélever une bouteille dans les systèmes fournisseurs (35) et/ou à amener la bouteille dans le dispositif de traitement de bouteilles (1 ; 190).

2. Ligne de remplissage selon la revendication 1, **caractérisée par** un système de commande (100), lequel est aménagé pour déterminer l'ordre chronologique prédéfini à l'aide d'un ordre chronologique de sortie librement sélectionnable, selon lequel les bouteilles entièrement traitées sont censées quitter la ligne de remplissage,
le système de commande (100) étant aménagé pour prendre en compte lors de la détermination de l'ordre chronologique prédéfini différentes durées de traitement pour différentes bouteilles dans la ligne de remplissage.

3. Ligne de remplissage selon l'une quelconque des revendications précédentes, **caractérisée en ce que** le dispositif de traitement de bouteilles (1; 190) comporte plusieurs postes de traitement (29 ; 91) pour le traitement de chaque fois une bouteille, les postes de traitement (29 ; 91) individuels étant réalisés universellement pour recevoir tous les différents types de bouteille (2, 3, 4, 5) et le trieur (36) étant aménagé pour amener les bouteilles du trajet d'avance vers des postes de traitement (29; 91) individuels du dispositif de traitement de bouteilles (1 ; 190) selon l'ordre chronologique prédéfini.

4. Ligne de remplissage selon l'une quelconque des revendications précédentes, **caractérisée en ce que** le trieur (36) comporte une première zone de rail (22, 23, 24, 25), vouée à un type, qui est placée sur le premier système fournisseur (35) et qui est affectée à ce dernier et
au moins une première autre zone de rail (22, 23, 24, 25), vouée à un type, qui est placée sur l'au moins un autre système fournisseur (35) et qui est affectée à ce dernier,
de telle sorte que dans la zone de rail (22, 23, 24, 25) respective, un mover (18, 19, 20, 21) puisse reprendre les bouteilles à partir du système fournisseur (35) respectif.

5. Ligne de remplissage selon la revendication 4, **caractérisée en ce que** le mover (18, 19, 20, 21) peut passer par intermédiaire d'un aiguillage (48, 49, 50, 51, 53, 54, 55, 56) de la zone de rail (22, 23, 24, 25) respective vouée à un type sur le trajet d'avance qui comporte une zone de rail (30) mixte, laquelle est une zone de rail sur laquelle sont transportés simultanément différents types de bouteilles (2, 3, 4, 5),
la zone de rail (30) mixte s'engrenant avec le dispositif de traitement de bouteilles (1 ; 190) au moins dans une zone partielle, dans laquelle des bouteilles sont transférées au dispositif de traitement de bouteilles (1 ; 190).

6. Ligne de remplissage selon l'une quelconque des revendications précédentes, **caractérisée en ce que** le grappin (37) comporte une première pince de préhension pourvue de deux bras préhenseurs (38a, 38b ; 139a, 139b) mutuellement opposés, qui pour fermer le grappin (37) sont déplaçables l'une vers l'autre,
le grappin (37) comportant une deuxième pince de préhension (138 ; 39a, 39b), réglable en hauteur, placée au-dessus ou en-dessous de la première pince de préhension.

7. Ligne de remplissage selon l'une quelconque des revendications précédentes, **caractérisée en ce que** la ligne de remplissage comporte un carrousel de chargement (1; 101) pourvu de plusieurs postes de remplissage (29).

8. Ligne de remplissage selon la revendication 7, **caractérisée en ce que** le carrousel de chargement (1) est le dispositif de traitement de bouteilles.

9. Ligne de remplissage selon la revendication 7 ou 8, **caractérisée en ce que** le carrousel de chargement (1) comporte une alimentation de boisson pour au moins une boisson de base et au moins une boisson mélangée, le carrousel de chargement (1) étant aménagé pour mélanger individuellement pour chaque bouteille une boisson à partir de la boisson de base et de la boisson mélangée et pour l'embouteille dans une bouteille dans le poste de remplissage (29).

10. Ligne de remplissage selon la revendication 9, **caractérisée en ce que** le carrousel de chargement (1)
comporte au moins un réservoir annulaire (63) pour la boisson de base et chaque fois une sortie de remplissage pour les plusieurs postes de remplissage (29) et chaque fois une conduite principale (77) à partir de l'au moins un réservoir annulaire (63) pour la boisson de base et au moins une conduite auxiliaire plus petite, menant dans la conduite principale pour la boisson mélangée, dotées respectivement de soupapes (65, 66, 67, 68) réglables,
la ligne de remplissage étant aménagée pour commander le remplissage via les soupapes (65, 66, 67, 68) réglables de telle sorte que la boisson de base et la boisson mélangée soient alimentées selon un ordre chronologique, le remplissage s'achevant par la boisson de base pure, sans boisson mélangée.

11. Ligne de remplissage selon l'une quelconque des revendications précédentes, **caractérisée par** un système de décoration (90 ; 190), destiné à décorer les bouteilles, lequel est aménagé pour décorer les bouteilles de manière sélective et individuelle, indépendamment de leur ordre chronologique, au moins en fonction du type de bouteille (2, 3, 4, 5) de la bouteille respective et/ou d'un remplissage, avec lequel la bouteille est remplie.

12. Ligne de remplissage selon l'une quelconque des revendications précédentes, **caractérisée en ce que** la commande de la ligne de remplissage pour ses réglages mécaniques et/ou pour ses réglages concernant les mélanges du produit de remplissage s'effectue via des codes individuels, apposés sur les bouteilles, qui sont détectés par au moins un lecteur.

13. Procédé, destiné à amener en fonction des besoins des bouteilles dans un dispositif de traitement de bouteilles (1 ; 190) d'une ligne de remplissage,
par un trieur (36)
• des bouteilles d'un premier type de bouteilles (2, 3, 4, 5) étant prélevées par un premier système fournisseur (35), et
• au moins des bouteilles d'un premier autre type de bouteille (2, 3, 4, 5) étant prélevées par un premier autre système fournisseur (35), le premier autre type de bouteille (2, 3, 4, 5) se différenciant par la forme et/ou par la taille du premier type de bouteille (2, 3, 4, 5),
le trieur (36) alignant les bouteilles selon un ordre chronologique prédéfini sur un trajet d'avance,
les bouteilles étant amenées selon l'ordre chronologique prédéfini du trajet d'avance vers le dispositif de traitement de bouteilles (1 ; 190),
l'ordre chronologique prédéfini étant librement sélectionnable, et
le trieur (36) comportant plusieurs movers (18, 19, 20, 21, 27, 118) entraînés de manière indépendante et individuelle,
**caractérisée en ce que** le dispositif de traitement de bouteilles (1; 190) est conçu sous la forme d'un dispositif à carrousel et **en ce que** la ligne de remplissage comporte un système de prélèvement (31), destiné à prélever les bouteilles dans le dispositif de traitement de bouteilles (1 ; 190), un nombre de parcours étant susceptible d'être commandé individuellement pour chaque bouteille dans le dispositif de traitement de bouteilles (1 ; 190) et,
**en ce que** chaque mover (18, 19, 20, 21, 27, 118) comporte un grappin (37), destiné à prélever une bouteille dans les systèmes fournisseurs (35) et/ou à amener la bouteille dans le dispositif de traitement de bouteilles (1 ; 190).

14. Procédé selon la revendication 13, **caractérisée en ce que** l'ordre chronologique prédéfini est déterminé à l'aide d'un ordre chronologique de sortie librement sélectionnable, selon lequel les bouteilles entièrement traitées sont censées quitter la ligne de remplissage,
lors de la détermination de l'ordre chronologique prédéfini, différentes durées de traitement pour différentes bouteilles dans la ligne de remplissage étant prises en compte.
